# EUROPEAN PATENT APPLICATION

(11) **EP 4 813 714 A1**
(43) Date of publication of application: **30.09.2026**
(21) Application number: 24903873.8
(22) Date of filing: 01.08.2024
(51) Int. Cl.: B60K 35/22, B60K 35/60, B60K 35/55, B60K 35/81

(54) **VEHICLE REAR SEAT DISPLAY DEVICE**

(30) Priority: 12.12.2023 KR 20230179219
(71) Applicant: LG Electronics Inc., Yeongdeungpo-gu Seoul 07336 (KR)
(72) Inventor: JEON, Byunglok, Seoul 06772 (KR); KIM, Hansoo, Seoul 06772 (KR); SON, Sanghyeun, Seoul 06772 (KR); SHIM, Inkoo, Seoul 06772 (KR); KIM, Jinhee, Seoul 06772 (KR); KIM, Byungkyu, Seoul 06772 (KR); CHUN, Sewon, Seoul 06772 (KR)
(74) Representative: Vossius & Partner Patentanwälte Rechtsanwälte mbB
(86) International application number: PCT/KR2024/011341
(87) International publication number: WO 2025/127302

(57) **Abstract**

A vehicle rear seat display device according to an embodiment of the present invention comprises: a first display and a second display coupled to match each of a plurality of moving frames arranged in parallel; a first driving module for driving the plurality of moving frames, to which the first and second displays are coupled, such that same move in a first direction; a second driving module for driving the plurality of moving frames such that same move in a second direction; and a control unit for controlling driving of the first and second driving modules and a screen. Here, the first driving module is disposed to move together with the plurality of moving frames along a guide rail formed on a first fixed frame. In addition, the second driving module is coupled to one side of the first fixed frame, and disposed such that each of the plurality of moving frames moves along a plurality of guide rails formed on a second fixed frame disposed on rear surfaces of the plurality of moving frames. In addition, each of the first and second displays is disposed on front surfaces of the plurality of moving frames and is controlled to move according to driving of the first and/or second driving modules.

## Description

### Technical Field

The present disclosure relates to a vehicle rear seat display device, and more particularly, to a vehicle rear seat display device configured to be movable in different directions within a vehicle.

### Background Art

A vehicle is an apparatus that moves in a direction desired by a user who gets on board. A representative example is an automobile.

Meanwhile, for the convenience of the user using the vehicle, there is a trend in which various sensors, electronic apparatuses, and the like are provided. In particular, research on an advanced driver assistance system (ADAS) is being actively carried out for the user's convenience in driving. Furthermore, development of autonomous vehicles is being actively carried out.

In addition, as spending more time in the vehicle, there is a growing trend of users no longer viewing the vehicle merely as a means of transportation, but rather perceiving it as a space. Accordingly, research is being conducted to provide various infotainment environments more realistically by using a large display within the vehicle.

There is a need for all passengers in the vehicle to use the display installed for convenience in a more convenient and selective manner depending on the situation.

### Disclosure of Invention

### Technical Problem

An aspect of the present disclosure is to solve the foregoing and other problems.

According to some embodiments of the present disclosure, an aspect thereof is to provide a vehicle rear seat display device formed to allow a plurality of screens to be movable together in different directions.

Furthermore, according to some embodiments of the present disclosure, an aspect thereof is to provide a vehicle rear seat display device that operates to allow a plurality of screens located in a rear seat of a vehicle to be used as independent screens or multi-screens depending on the needs of a rear seat occupant.

In addition, according to some embodiments of the present disclosure, another aspect thereof is to provide a vehicle rear seat display device that operates to allow a plurality of screens located in a rear seat of a vehicle to be used by an occupant in a front seat when necessary.

Moreover, according to some embodiments of the present disclosure, an aspect thereof is to provide a vehicle rear seat display device in which a plurality of screens are implemented to be foldable based on the ceiling of the vehicle when the plurality of screens located in the rear seat of the vehicle are not used or an occupant can view the screen at a comfortable angle.

### Solution to Problem

To this end, a vehicle rear seat display device according to an embodiment of the present disclosure can operate to allow a plurality of screens to be movable simultaneously in different directions. To this end, a vehicle rear seat display device is formed such that a plurality of movable frames coupled to rear surfaces of a plurality of screens can move in different directions according to the driving of first and second drive modules.

Specifically, a vehicle rear seat display device according to an embodiment of the present disclosure can include a first display and a second display coupled to match a plurality of movable frames, respectively, arranged side by side; a first drive module that drives the plurality of movable frames coupled to the first and second displays to move in a first direction, and a second drive module that drives the plurality of movable frames coupled to the first and second displays to move in a second direction different from the first direction; and a control part that controls the driving of the first and second drive modules and screens of the first and second displays. Additionally, the first drive module can be arranged to move together with the plurality of movable frames along a guide rail formed on a first fixed frame, and the second drive module can be coupled to one side of the first fixed frame, and arranged such that the plurality of movable frames respectively move along a plurality of guide rails formed on a second fixed frame arranged on rear surfaces of the plurality of movable frames. Additionally, the first and second displays can be respectively arranged on front surfaces of the plurality of movable frames, and controlled to move according to the driving of at least one of the first and second drive modules.

In an embodiment, the control part can control the first drive module to move in the first direction along the guide rail of the first fixed frame together with the plurality of movable frames from one of the front and rear seats of the vehicle to a position corresponding to the other in response to a first signal. Additionally, the control part can control the second drive module to move the plurality of movable frames in the second direction of getting closer to or away from each other along the plurality of guide rails of the second fixed frame in response to a second signal.

In an embodiment, the first drive module can include a first cableveyor that moves in the first direction within the first fixed frame in conjunction with the plurality of movable frames, and the second drive module can include second and third cableveyors that move in the second direction within the second fixed frame in conjunction with each of the plurality of movable frames. Additionally, each of the first to third cableveyors can include a plurality of unit chains connected to be mutually rotatable.

In an embodiment, the first drive module can include a first motor mounted within the first fixed frame, wherein the first motor applies a driving force to a rack and pinion gear module in conjunction therewith so as to allow the plurality of movable frames to move in the first direction along the guide rail of the first fixed frame.

In an embodiment, the control part can control the first motor to rotate by applying electrical power to the first motor in response to a first signal, wherein the first direction is determined as one of directions in which the plurality of movable frames face the front and rear seats of the vehicle according to a rotation direction of the first motor.

In an embodiment, the second drive module can include a second motor and a third motor in conjunction with the plurality of movable frames, respectively, within the second fixed frame, wherein the second and third motors each apply a driving force to a rack and pinion gear module in conjunction therewith so as to move each of the plurality of movable frames in the second direction along each guide rail within the second fixed frame, and the second direction is determined by the second motor and the third motor rotating in different rotation directions.

In an embodiment, the control part can apply electrical power to the second and third motors in response to the second signal to control each motor to rotate in a different direction, wherein the second direction is determined as one of directions in which the plurality of movable frames get closer to or away from each other according to respective rotation directions of the second and third motors.

In an embodiment, the control part can control the electrical power applied to the second and third motors to control a movement speed of the plurality of movable frames getting closer to or away from each other, and control the rotation of the second and third motors to stop based on respective one sides of the plurality of movable frames being in contact with each other.

In an embodiment, the vehicle rear seat display device can further include a third drive module coupled to the second fixed frame to adjust tilting so as to allow the plurality of movable frames to form a predetermined angle with respect to the first fixed frame.

In an embodiment, the third drive module can include a fourth motor arranged parallel to a length direction of the first fixed frame, wherein the fourth motor applies a driving force to a tilting gear module in conjunction thereto so as to allow the plurality of movable frames to operate to form a predetermined angle with respect to the first fixed frame.

In an embodiment, the control part can control the third drive module to perform a folding operation so as to allow the plurality of movable frames to be horizontal with the first fixed frame before driving the first drive module in response to a first signal, and control the third drive module to perform an unfolding operation so as to form a predetermined angle with the first fixed frame after moving the plurality of movable frames in response to the first signal.

In an embodiment, for the vehicle rear seat display device, in an initial state, the plurality of movable frames can be arranged to form a horizontal line with the first fixed frame. Additionally, the control part can control the third drive module to perform an unfolding operation so as to allow the plurality of movable frames to form a predetermined angle with the first fixed frame in response to a request for use of at least one of the first and second displays in the initial state.

In an embodiment, the vehicle rear seat display device can further include at least one sensor for detecting a position and arrangement state of the plurality of movable frames. Additionally, the control part can determine a movement operation of the plurality of movable frames according to the driving of at least one of the first and second drive modules based on the detected position and arrangement state.

In an embodiment, the control part can control whether first and second displays arranged on respective front surfaces of the plurality of movable frames are activated and screens to be displayed differently based on the detected position and arrangement state.

### Advantageous Effects of Invention

According to a vehicle rear seat display device in accordance with the present disclosure, as a plurality of screens located in a rear seat of a vehicle move in a direction of getting closer to or away from each other, a display mode of the screen can be changed, thereby allowing them to be used as independent screens or multi-screens depending on the needs of a rear seat occupant. Accordingly, a user experience utilizing a plurality of screens is further expanded.

In addition, according to a vehicle rear seat display device in accordance with the present disclosure, a plurality of screens located in a rear seat of a vehicle can be implemented to be movable toward a front seat or back toward a rear seat, thereby allowing the rear seat screens to also be used by an occupant in the front seat when necessary. Accordingly, a limited number of displays can be shared by more occupants, thereby expanding the user experience and allowing an interior design of a vehicle to be kept simple.

### Brief Description of Drawings

FIG. 1 is a block diagram referenced to describe a vehicle and a rear seat display device related to an embodiment of the present disclosure.
FIG. 2 is a drawing showing a vehicle rear seat display device installed within a vehicle according to an embodiment of the present disclosure.
FIG. 3 is a block diagram for explaining a detailed configuration of a vehicle rear seat display device according to an embodiment of the present disclosure.
FIG. 4 is a conceptual diagram for explaining a movement operation of a vehicle rear seat display device and a compatibility with a front seat display device according to an embodiment of the present disclosure.
FIGS. 5A, 5B, 5C, and 5D are conceptual views for explaining that a vehicle rear seat display device according to an embodiment of the present disclosure moves in different directions and adjusts its angle.
FIGS. 6 and 7 are drawings for explaining a structure and operation of a first drive module of a vehicle rear seat display device according to an embodiment of the present disclosure.
FIG. 8 is a drawing for explaining an angle adjustment operation after an operation of a first drive module according to an embodiment of the present disclosure.
FIGS. 9 and 10 are drawings for explaining a structure and operation of a second drive module of a vehicle rear seat display device according to an embodiment of the present disclosure.
FIG. 11 is a drawing for explaining a structure of a third drive module for angle adjustment according to an embodiment of the present disclosure.
FIGS. 12 and 13 are drawings for explaining an operation of a third drive module according to an embodiment of the present disclosure.

### Mode for the Invention

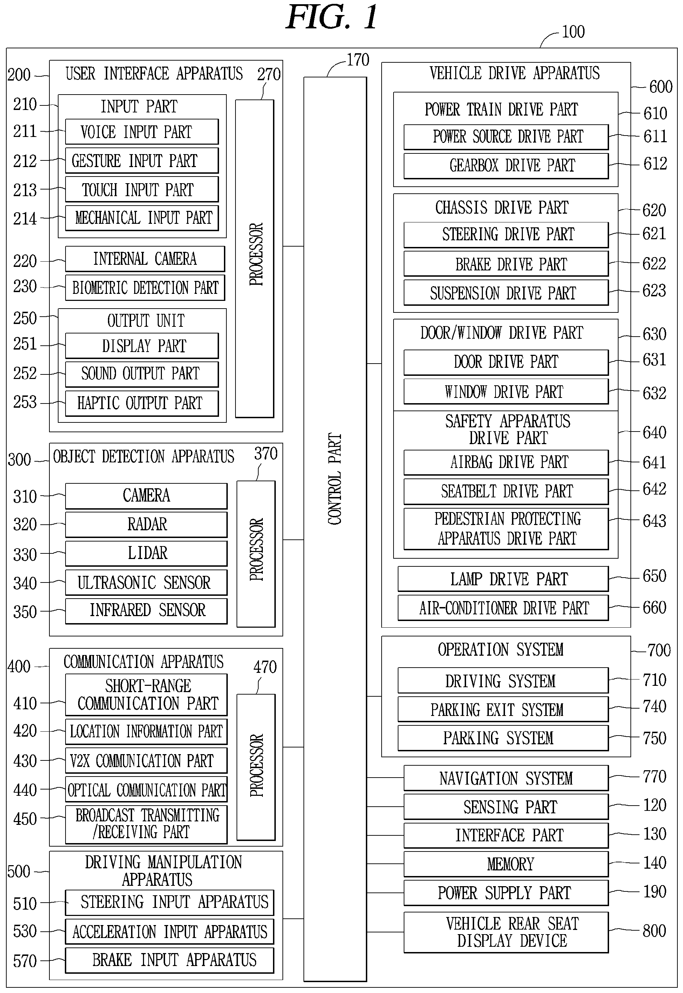

FIG. 1 is a block diagram referenced to describe a vehicle and a rear seat display device related to an embodiment of the present disclosure.

Referring to FIG. 1, a vehicle 100 can include a wheel that rotates by a power source and a steering input apparatus 510 for adjusting a direction of travel of the vehicle 100.

The vehicle 100 can be an autonomous driving vehicle. The vehicle 100 can be switched into an autonomous driving mode or a manual mode based on a user input. For example, the vehicle 100 can be converted from the manual mode into the autonomous driving mode or from the autonomous driving mode into the manual mode based on a user input received through a user interface apparatus (hereinafter, referred to as a 'user terminal') 200.

The vehicle 100 can be switched into the autonomous driving mode or the manual mode based on driving environment information. The driving environment information can be generated based on object information provided from an object detecting apparatus 300. For example, the vehicle 100 can be switched from the manual mode into the autonomous driving mode or from the autonomous driving mode into the manual mode based on driving environment information generated in the object detection apparatus 300. In an example, the vehicle 100 can be switched from the manual mode into the autonomous driving mode or from the autonomous driving mode into the manual mode based on driving environment information received through a communication apparatus 400.

The vehicle 100 can be switched from the manual mode into the autonomous driving mode or from the autonomous driving mode into the manual mode based on information, data or signal provided from an external device.

When the vehicle 100 can be operated in the autonomous driving mode, the autonomous driving vehicle 100 can be operated based on an operation system 700. For example, the autonomous driving vehicle 100 can be driven based on information, data or signal generated in a driving system 710, a parking exit system 740 and a parking system 750.

When the vehicle 100 is driven in the manual mode, the autonomous driving vehicle 100 can receive a user input for driving through a driving manipulation apparatus 500. The vehicle 100 can be driven based on the user input received through the driving manipulation apparatus 500.

An overall length refers to a length from a front end to a rear end of the vehicle 100, a width refers to a width of the vehicle 100, and a height refers to a length from a bottom of a wheel to a roof. In the following description, an overall-length direction L can refer to a direction which is a criterion for measuring the overall length of the vehicle 100, a width direction W can refer to a direction that is a criterion for measuring a width of the vehicle 100, and a height direction H can refer to a direction that is a criterion for measuring a height of the vehicle 100.

As illustrated in FIG. 1, the vehicle 100 can include a user interface apparatus (hereinafter, referred to as a 'user terminal') 200, an object detection apparatus 300, a communication apparatus 400, a driving manipulation apparatus 500, a vehicle drive apparatus 600, an operation system 700, a navigation system 770, a sensing part 120, an interface part 130, a memory 140, a control part 170, and a power supply part 190.

According to embodiments, the vehicle 100 can include more components in addition to components to be explained in this specification or can not include some of those components to be explained in this specification.

The user interface apparatus 200 is an apparatus for communication between the vehicle 100 and a user. The user interface apparatus 200 can receive a user input and provide information generated in the vehicle 100 to the user. The vehicle 100 can implement a user interface (UI) or user experience (UX) through a user interface apparatus (hereinafter, referred to as a 'user terminal') 200.

The user interface apparatus 200 can include an input part 210, an internal camera 220, a biometric detection part 230, an output part 250, and a processor 270. According to embodiments, the user interface apparatus 200 can include more components in addition to components to be explained in this specification or can not include some of those components to be explained in this specification.

The input part 210 can allow the user to input information, and data collected in the input part 210 can be analyzed by the processor 270 and processed as a user's control command.

The input part 210 can be arranged within the vehicle. For example, the input part 210 can be arranged on one area of a steering wheel, one area of an instrument panel, one area of a seat, one area of each pillar, one area of a door, one area of a center console, one area of a headlining, one area of a sun visor, one area of a windshield, one area of a window, or the like.

The input part 210 can include a voice input module 211, a gesture input module 212, a touch input module 213, and a mechanical input module 214.

The audio input part 211 can convert a user's voice input into an electric signal. The converted electric signal can be provided to the processor 270 or the control part 170. The audio input part 211 can include at least one microphone.

The gesture input part 212 can convert a user's gesture input into an electric signal. The converted electric signal can be provided to the processor 270 or the control part 170.

The gesture input part 212 can include at least one of an infrared sensor and an image sensor for detecting the user's gesture input. According to an embodiment, the gesture input part 212 can detect a user's three-dimensional (3D) gesture input. To this end, the gesture input part 212 can include a light output part outputting a plurality of infrared rays or a plurality of image sensors.

The gesture input part 212 can detect the user's 3D gesture input by a time of flight (TOF) method, a structured light method or a disparity method.

The touch input part 213 can convert the user's touch input into an electric signal. The converted electric signal can be provided to the processor 270 or the control part 170.

The touch input part 213 can include a touch sensor for detecting the user's touch input. According to an embodiment, the touch input part 213 can be integrated with the display part 251 so as to implement a touch screen. The touch screen can provide an input interface and an output interface between the vehicle 100 and the user.

The mechanical input part 214 can include at least one of a button, a dome switch, a jog wheel, and a jog switch. An electric signal generated by the mechanical input part 214 can be provided to the processor 270 or the control part 170. The mechanical input part 214 can be arranged on a steering wheel, a center fascia, a center console, a cockpit module, a door and the like.

The internal camera 220 can acquire an internal image of the vehicle. The processor 270 can detect a user's state based on the internal image of the vehicle. The processor 270 can acquire information related to the user's gaze from the internal image of the vehicle. The processor 270 can detect a user gesture from the internal image of the vehicle.

The biometric detection part 230 can acquire the user's biometric information. The biometric detection part 230 can include a sensor for detecting the user's biometric information and acquire fingerprint information and heart rate information regarding the user using the sensor. The biometric information can be used for user authentication.

The output part 250 can generate an output related to a visual, auditory or tactile signal. The output part 250 can include at least one of a display part 251, a sound output part 252 and a haptic output part 253.

The display part 251 can output graphic objects corresponding to various types of information. The display part 251 can include at least one of a liquid crystal display (LCD), a thin film transistor-LCD (TFT LCD), an organic light-emitting diode (OLED), a flexible display, a three-dimensional (3D) display and an e-ink display.

The display part 251 can be inter-layered or integrated with a touch input part 213 to implement a touch screen.

The display part 251 can be implemented as a head-up display (HUD). When the display part 251 is implemented as the HUD, the display part 251 can be provided with a projecting module so as to output information through an image which is projected on a windshield or a window.

The display part 251 can include a transparent display. The transparent display can be attached to the windshield or the window. The transparent display can display a predetermined screen with a predetermined transparency. In order to achieve transparency, the transparent display can include at least one of a transparent Thin Film Electroluminescent (TFEL) display, an Organic Light Emitting Diode (OLED) display, a transparent Liquid Crystal Display (LCD), a transmissive transparent display, and a transparent Light Emitting Diode (LED) display. The transparency of the transparent display can be adjustable.

Meanwhile, the user interface apparatus 200 can include a plurality of display parts 251a to 251g.

The display part 251 can be arranged on one area of a steering wheel, one area 521a, 251b, 251e of an instrument panel, one area 251d of a seat, one area 251f of each pillar, one area 251g of a door, one area of a center console, one area of a headlining or one area of a sun visor, or implemented on one area 251c of a windshield or one area 251h of a window.

The sound output part 252 can convert an electric signal provided from the processor 270 or the control part 170 into an audio signal for output. To this end, the sound output part 252 can include at least one speaker.

The haptic output part 253 generates a tactile output. For example, the haptic output part 253 can vibrate a steering wheel, a safety belt, a seat 110FL, 110FR, 110RL, 110RR to allow the user to recognize such an output.

The processor (hereinafter, referred to as a 'control part') 270 can control an overall operation of each unit of the user interface apparatus 200. According to an embodiment, the user interface apparatus 200 can include a plurality of processors 270 or can not include any processor 270.

When the processor 270 is not included in the user interface apparatus 200, the user interface apparatus 200 can operate according to a control of a processor of another apparatus within the vehicle 100 or the control part 170.

Meanwhile, the user interface apparatus 200 can be called as a vehicle display device. The user interface apparatus 200 can operate according to the control of the control part 170.

The object detection apparatus 300 is an apparatus for detecting an object located at outside of the vehicle 100. The object can be a variety of objects associated with driving (operation) of the vehicle 100. The object can include an lanes, another vehicle, a pedestrian, a two-wheeled vehicle, a traffic signal, light, a road, a structure, a speed bump, a terrain feature, an animal, and the like

The road can include a road surface, a curve, an upward slope, a downward slope and the like.

The structure can be an object that is located near a road and fixed on the ground. For example, the structure can include a streetlamp, a roadside tree, a building, an electric pole, a traffic light, a bridge and the like.

The terrain feature can include a mountain, a hill and the like.

Meanwhile, objects can be classified into a moving object and a fixed object. For example, the moving object can be a concept including another vehicle and a pedestrian. The fixed object can be a concept including a traffic signal, a road and a structure.

The object detection apparatus 300 can include a camera 310, a radar 320, a lidar 330, an ultrasonic sensor 340, an infrared sensor 350 and a processor 370.

According to an embodiment, the object detection apparatus 300 can further include other components in addition to the components described, or can not include some of the components described.

The camera 310 can be located on an appropriate portion outside the vehicle to acquire an external image of the vehicle. The camera 310 can be a mono camera, a stereo camera 310a, an AVM (Around View Monitoring) camera 310b, or a 360-degree camera.

For example, the camera 310 can be arranged in the interior of the vehicle, in close proximity to a front windshield, to acquire an image on the front of the vehicle. Or, the camera 310 can be arranged adjacent to a front bumper or a radiator grill.

For example, the camera 310 can be arranged in the interior of the vehicle, in close proximity to a rear glass, to acquire an image on the rear of the vehicle. Or, the camera 310 can be arranged adjacent to a rear bumper, a trunk or a tail gate.

For example, the camera 310 can be arranged in close proximity to at least one of side windows in the interior of the vehicle to acquire an image on the side of the vehicle. Or, the camera 310 can be arranged adjacent to a side mirror, a fender or a door.

The camera 310 can provide an acquired image to the processor 370.

The radar 320 can include electric wave transmitting and receiving portions. The radar 320 can be implemented as a pulse radar or a continuous wave radar according to a principle of emitting electric waves. The radar 320 can be implemented in a frequency modulated continuous wave (FMCW) manner or a frequency shift keying (FSK) manner according to a signal waveform, among the continuous wave radar methods.

The radar 320 can detect an object in a time of flight (TOF) manner or a phase-shift manner through the medium of electromagnetic waves, and detect a position of the detected object, a distance from the detected object and a relative speed with the detected object.

The radar 320 can be arranged on an appropriate position outside the vehicle for detecting an object which is located on the front, rear or side of the vehicle.

The lidar 330 can include laser transmitting and receiving portions. The lidar 330 can be implemented in a time of flight (TOF) manner or a phase-shift manner.

The lidar 330 can be implemented as a drive type or a non-drive type.

For the drive type, the lidar 330 can be rotated by a motor and detect object near the vehicle 100.

For the non-drive type, the lidar 330 can detect, through light steering, objects which are located within a predetermined range based on the vehicle 100. The vehicle 100 can include a plurality of non-drive type lidars 330.

The lidar 330 can detect an object in a time of flight (TOF) manner or a phase-shift manner through the medium of laser light, and detect a position of the detected object, a distance from the detected object and a relative speed with the detected object.

The lidar 330 can be arranged on an appropriate position outside the vehicle for detecting an object located on the front, rear or side of the vehicle.

The ultrasonic sensor 340 can include ultrasonic wave transmitting and receiving portions. The ultrasonic sensor 340 can detect an object based on an ultrasonic wave, and detect a position of the detected object, a distance from the detected object and a relative speed with the detected object.

The ultrasonic sensor 340 can be arranged on an appropriate position outside the vehicle for detecting an object located on the front, rear or side of the vehicle.

The infrared sensor 350 can include infrared light transmitting and receiving portions. The infrared sensor 340 can detect an object based on infrared light, and detect a position of the detected object, a distance from the detected object and a relative speed with the detected object.

The infrared sensor 350 can be arranged on an appropriate position outside the vehicle for detecting an object located on the front, rear or side of the vehicle.

The processor 370 can control an overall operation of each unit of the object detection apparatus 300.

The processor 370 can detect an object based on an acquired image, and track the object. The processor 370 can execute operations, such as a calculation of a distance from the object, a calculation of a relative speed with the object and the like, through an image processing algorithm.

The processor 370 can detect an object based on a reflected electromagnetic wave which an emitted electromagnetic wave is reflected from the object, and track the object. The processor 370 can execute operations, such as a calculation of a distance from the object, a calculation of a relative speed with the object and the like, based on the electromagnetic wave.

The processor 370 can detect an object based on a reflected laser beam which an emitted laser beam is reflected from the object, and track the object. The processor 370 can execute operations, such as a calculation of a distance from the object, a calculation of a relative speed with the object and the like, based on the laser beam.

The processor 370 can detect an object based on a reflected ultrasonic wave which an emitted ultrasonic wave is reflected from the object, and track the object. The processor 370 can execute operations, such as a calculation of a distance from the object, a calculation of a relative speed with the object and the like, based on the ultrasonic wave.

The processor 370 can detect an object based on reflected infrared light which emitted infrared light is reflected from the object, and track the object. The processor 370 can execute operations, such as a calculation of a distance from the object, a calculation of a relative speed with the object and the like, based on the infrared light.

According to an embodiment, the object detection apparatus 300 can include a plurality of processors 370 or can not include any processor 370. For example, each of the camera 310, the radar 320, the lidar 330, the ultrasonic sensor 340 and the infrared sensor 350 can include the processor in an individual manner.

When the processor 370 is not included in the object detection apparatus 300, the object detection apparatus 300 can operate according to the control of a processor of an apparatus within the vehicle 100 or the control part 170.

The object detection apparatus 400 can operate according to the control of the control part 170.

The communication apparatus 400 is an apparatus for performing communication with an external device. Here, the external device can be another vehicle, a mobile terminal or a server.

The communication apparatus 400 can perform the communication by including at least one of a transmitting antenna, a receiving antenna, and radio frequency (RF) circuit and RF device for implementing various communication protocols.

The communication apparatus 400 can include a short-range communication part 410, a location information part 420, a V2X communication part 430, an optical communication part 440, a broadcast transmitting/receiving part 450 and a processor 470.

According to an embodiment, the communication apparatus 400 can further include other components in addition to the components described, or can not include some of the components described.

The short-range communication part 410 is a unit for facilitating short-range communications. The short-range communication part 410 can support short-range communication using at least one of Bluetooth^{™}, Radio Frequency Identification (RFID), Infrared Data Association (IrDA), Ultra Wideband (UWB), ZigBee, Near field communication (NFC), Wireless-Fidelity (Wi-Fi), Wi-Fi Direct, Wireless Universal Serial Bus (Wireless USB), and the like.

The short-range communication part 410 can construct short-range area networks to perform short-range communication between the vehicle 100 and at least one external device.

The location information part 420 is a unit for acquiring position information. For example, the location information part 420 can include a Global Positioning System (GPS) module or a Differential Global Positioning System (DGPS) module.

The V2X communication part 430 is a unit for performing wireless communications with a server (vehicle to infrastructure; V2I), another vehicle (vehicle to vehicle; V2V), or a pedestrian (vehicle to pedestrian; V2P). The V2X communication part 430 can include an RF circuit capable of implementing a communication protocol with an infrastructure (V2I), a communication protocol between vehicles (V2V) and a communication protocol with a pedestrian (V2P).

The optical communication part 440 is a unit for performing communication with an external device through the medium of light. The optical communication part 440 can include a light-emitting diode for converting an electric signal into an optical signal and sending the optical signal to the exterior, and a photodiode for converting the received optical signal into an electric signal.

According to an embodiment, the optical transmission part can be formed integrally with lamps provided on the vehicle 100.

The broadcast transmitting/receiving part 450 is a unit for receiving a broadcast signal from an external broadcast managing entity or transmitting a broadcast signal to the broadcast managing entity via a broadcast channel. The broadcast channel can include a satellite channel, a terrestrial channel, or both. The broadcast signal can include a TV broadcast signal, a radio broadcast signal and a data broadcast signal.

The processor 470 can control an overall operation of each unit of the communication apparatus 400.

According to an embodiment, the communication apparatus 400 can include a plurality of processors 470 or can not include any processor 470.

When the processor 470 is not included in the communication apparatus 400, the communication apparatus 400 can operate according to the control of a processor of another apparatus within the vehicle 100 or the control part 170.

Meanwhile, the communication apparatus 400 can implement a vehicle display device together with the user interface apparatus 200. In this instance, the display device for the vehicle can be referred to as a telematics device or an Audio Video Navigation (AVN) device.

The communication apparatus 400 can operate according to the control of the control part 170.

The driving manipulation apparatus 500 is an apparatus for receiving a user input for driving.

In a manual mode, the vehicle 100 can be operated based on a signal provided by the driving manipulation apparatus 500.

The driving manipulation apparatus 500 can include a steering input apparatus 510, an acceleration input apparatus 530 and a brake input apparatus 570.

The steering input apparatus 510 can receive an input regarding a driving (ongoing) direction of the vehicle 100 from the user. The steering input apparatus 510 is preferably configured in the form of a wheel allowing a steering input in a rotating manner. According to an embodiment, the steering input apparatus can also be configured in a shape of a touch screen, a touchpad, or a button.

The acceleration input apparatus 530 can receive an input for accelerating the vehicle 100 from the user. The brake input apparatus 570 can receive an input for braking the vehicle 100 from the user. Each of the acceleration input apparatus 530 and the brake input apparatus 570 is preferably configured in the form of a pedal. According to an embodiment, the acceleration input apparatus or the brake input apparatus can also be configured in the form of a touch screen, a touch pad or a button.

The driving manipulation apparatus 500 can operate according to the control of the control part 170.

The vehicle drive apparatus 600 is an apparatus for electrically controlling the driving of various apparatuses within the vehicle 100.

The vehicle drive apparatus 600 can include a power train drive part 610, a chassis drive part 620, a door/window drive part 630, a safety apparatus drive part 640, a lamp drive part 650, and an air-conditioner drive part 660.

According to an embodiment, the vehicle drive apparatus 600 can further include other components in addition to the components described, or can not include some of the components described.

Meanwhile, the vehicle drive apparatus 600 can include a processor. Each unit of the vehicle drive apparatus 600 can individually include a processor.

The power train drive part 610 can control an operation of a power train apparatus.

The power train drive part 610 can include a power source drive part 611 and a gearbox drive part 612.

The power source drive part 611 can perform a control for a power source of the vehicle 100.

For example, upon using a fossil fuel-based engine as the power source, the power source drive part 611 can perform an electronic control for the engine. Accordingly, an output torque and the like of the engine can be controlled. The power source drive part 611 can adjust the engine output torque according to the control of the control part 170.

For example, upon using an electric energy-based motor as the power source, the power source drive part 611 can perform a control for the motor. The power source drive part 611 can adjust a rotating speed, a torque and the like of the motor according to the control of the control part 170.

The gearbox drive part 612 can perform a control for a gearbox. The gearbox drive part 612 can adjust a state of the gearbox. The gearbox drive part 612 can change the state of the gearbox into drive (forward) (D), reverse (R), neutral (N) or parking (P).

Meanwhile, when an engine is the power source, the gearbox drive part 612 can adjust a locked state of a gear in the drive (D) state.

The chassis drive part 620 can control an operation of a chassis apparatus. The chassis drive part 620 can include a steering drive part 621, a brake drive part 622 and a suspension drive part 623.

The steering drive part 621 can perform an electronic control for a steering apparatus within the vehicle 100. The steering drive part 621 can change a driving direction of the vehicle.

The brake drive part 622 can perform an electronic control for a brake apparatus within the vehicle 100. For example, the brake drive part 622 can control an operation of brakes provided at wheels to reduce speed of the vehicle 100.

Meanwhile, the brake drive part 622 can individually control each of a plurality of brakes. The brake drive part 622 can differently control braking force applied to each of a plurality of wheels.

The suspension drive part 623 can perform an electronic control for a suspension apparatus within the vehicle 100. For example, the suspension drive part 623 can control the suspension apparatus to reduce vibration of the vehicle 100 when a bump is present on a road. Meanwhile, the suspension drive part 623 can individually control each of a plurality of suspensions.

The door/window drive part 630 can perform an electronic control for a door apparatus or a window apparatus within the vehicle 100.

The door/window drive part 630 can include a door drive part 631 and a window drive part 632.

The door drive part 631 can perform the control for the door apparatus. The door drive part 631 can control opening or closing of a plurality of doors of the vehicle 100. The door drive part 631 can control opening or closing of a trunk or a tail gate. The door drive part 631 can control opening or closing of a sunroof.

The window drive part 632 can perform the electronic control for the window apparatus. The window drive part 632 can control opening or closing of a plurality of windows of the vehicle 100.

The safety apparatus drive part 640 can perform an electronic control for various safety apparatuses within the vehicle 100.

The safety apparatus drive part 640 can include an airbag drive part 641, a seatbelt drive part 642 and a pedestrian protecting apparatus drive part 643.

The airbag drive part 641 can perform an electronic control for an airbag apparatus within the vehicle 100. For example, the airbag drive part 641 can control the airbag to be deployed upon a detection of a risk.

The seatbelt drive part 642 can perform an electronic control for a seatbelt apparatus within the vehicle 100. For example, the seatbelt drive part 642 can control passengers to be motionlessly seated in seats 110FL, 110FR, 110RL, 110RR using seatbelts upon a detection of a risk.

The pedestrian protecting apparatus drive part 643 can perform an electronic control for a hood lift and a pedestrian airbag. For example, the pedestrian protecting apparatus drive part 643 can control the hood lift and the pedestrian airbag to be open up upon detecting pedestrian collision.

The lamp drive part 650 can perform an electronic control for various lamp apparatuses within the vehicle 100.

The air-conditioner drive part 660 can perform an electronic control for an air conditioner within the vehicle 100. For example, the air-conditioner drive part 660 can control the air conditioner to supply cold air into the vehicle when internal temperature of the vehicle is high.

The vehicle drive apparatus 600 can include a processor. Each unit of the vehicle drive apparatus 600 can individually include a processor.

The vehicle drive apparatus 600 can operate according to the control of the control part 170.

The operation system 700 is a system that controls various driving modes of the vehicle 100. The operation system 700 can be operated in the autonomous driving mode.

The operation system 700 can include a driving system 710, a parking exit system 740 and a parking system 750.

According to an embodiment, the operation system 700 can further include other components in addition to the components described, or can not include some of the components described.

Meanwhile, the operation system 700 can include a processor. Each unit of the operation system 700 can individually include a processor.

According to an embodiment, the operation system 700 can be a sub concept of the control part 170 when it is implemented in a software configuration.

Meanwhile, according to an embodiment, the operation system 700 can be a concept including at least one of the user interface apparatus 200, the object detection apparatus 300, the communication apparatus 400, the vehicle drive apparatus 600, and the control part 170.

The driving system 710 can perform driving of the vehicle 100.

The driving system 710 can receive navigation information from a navigation system 770, transmit a control signal to the vehicle drive apparatus 600, and perform driving of the vehicle 100. The driving system 710 can receive object information from the object detection apparatus 300, transmit a control signal to the vehicle drive apparatus 600 and perform driving of the vehicle 100. The driving system 710 can receive a signal from an external device through the communication apparatus 400, transmit a control signal to the vehicle drive apparatus 600, and perform the driving of the vehicle 100.

The parking exit system 740 can perform an exit of the vehicle 100 from a parking lot.

The parking exit system 740 can receive navigation information from the navigation system 770, transmit a control signal to the vehicle drive apparatus 600, and perform the exit of the vehicle 100 from the parking lot. The parking exit system 740 can receive object information from the object detection apparatus 300, transmit a control signal to the vehicle drive apparatus 600 and perform the exit of the vehicle 100 from the parking lot. The parking exit system 740 can receive a signal from an external device through the communication apparatus 400, transmit a control signal to the vehicle drive apparatus 600, and perform the exit of the vehicle 100 from the parking lot.

The parking system 750 can perform parking of the vehicle 100.

The parking system 750 can receive navigation information from the navigation system 770, transmit a control signal to the vehicle drive apparatus 600, and park the vehicle 100. The parking system 750 can receive object information from the object detection apparatus 300, transmit a control signal to the vehicle drive apparatus 600 and park the vehicle 100. The parking system 750 can receive a signal from an external device through the communication apparatus 400, transmit a control signal to the vehicle drive apparatus 600, and park the vehicle 100.

The navigation system 770 can provide navigation information. The navigation information can include at least one of map information, information regarding a set destination, path information according to the set destination, information regarding various objects on a path, lane information and current location information of the vehicle.

The navigation system 770 can include a memory and a processor. The memory can store the navigation information. The processor can control an operation of the navigation system 770.

According to an embodiment, the navigation system 770 can update previously stored information by receiving information from an external apparatus through the communication apparatus 400.

According to an embodiment, the navigation system 770 can be classified as a sub component of the user interface apparatus 200.

The sensing part 120 can sense a status of the vehicle. The sensing part 120 can include a posture sensor (e.g., a yaw sensor, a roll sensor, a pitch sensor, etc.), a collision sensor, a wheel sensor, a speed sensor, a tilt sensor, a weight-detecting sensor, a heading sensor, a gyro sensor, a position module, a vehicle forward/backward movement sensor, a battery sensor, a fuel sensor, a tire sensor, a steering sensor by a turn of a handle, a vehicle internal temperature sensor, a vehicle internal humidity sensor, an ultrasonic sensor, an illumination sensor, an accelerator position sensor, a brake pedal position sensor, and the like.

The sensing part 120 can acquire sensing signals with respect to vehicle-related information, such as a pose, a collision, an orientation, a position (GPS information), an angle, a speed, an acceleration, a tilt, a forward/backward movement, a battery, a fuel, tires, lamps, internal temperature, internal humidity, a rotated angle of a steering wheel, external illumination, pressure applied to an accelerator, pressure applied to a brake pedal and the like.

The sensing part 120 can further include an accelerator sensor, a pressure sensor, an engine speed sensor, an air flow sensor (AFS), an air temperature sensor (ATS), a water temperature sensor (WTS), a throttle position sensor (TPS), a TDC sensor, a crank angle sensor (CAS), and the like.

The vehicle interface part 130 can serve as a path allowing the vehicle 100 to interface with various types of external devices connected thereto. For example, the vehicle interface part 130 can be provided with a port connectable with a mobile terminal, and connected to the mobile terminal through the port. In this instance, the interface part 130 can exchange data with the mobile terminal.

Meanwhile, the vehicle interface part 130 can serve as a path for supplying electric energy to the connected mobile terminal. When the mobile terminal is electrically connected to the vehicle interface part 130, the vehicle interface part 130 supplies electric energy supplied from a power supply part 190 to the mobile terminal according to the control of the control part 170.

The memory 140 is electrically connected to the control part 170. The memory 140 can store basic data for units, control data for controlling operations of units and input/output data. The memory 140 can be various storage apparatuses such as a ROM, a RAM, an EPROM, a flash drive, a hard drive, and the like in terms of hardware. The memory 140 can store various data for overall operations of the vehicle 100, such as programs for processing or controlling the control part 170.

According to an embodiment, the memory 140 can be integrated with the control part 170 or implemented as a sub component of the control part 170.

The control part 170 can control an overall operation of each unit of the vehicle 100. The control part 170 can be referred to as an Electronic Control Unit (ECU).

The power supply part 190 can supply power for an operation of each component according to the control of the control part 170. Specifically, the power supply part 190 can receive power supplied from an internal battery of the vehicle, and the like.

At least one processor and the control part 170 included in the vehicle 100 can be implemented using at least one of application specific integrated circuits (ASICs), digital signal processors (DSPs), digital signal processing devices (DSPDs), programmable logic devices (PLDs), field programmable gate arrays (FPGAs), processors, control parts, micro control parts, microprocessors, and electric units performing other functions.

Meanwhile, in embodiments of the present disclosure, a 'driver', 'occupant', 'driver or occupant (driver/occupant)' refers to a driver, passenger, co-passenger, occupant, or the like who is on board a vehicle capable of autonomous driving according to an embodiment of the present disclosure, and can be one or more.

Additionally, in embodiments of the present disclosure, the term 'vehicle' is used to refer to a vehicle capable of performing autonomous driving by artificial intelligence (AI) or a vehicle capable of receiving such services. In addition, in embodiments of the present disclosure, the 'vehicle' can be freely switched between manual driving, fully autonomous driving, and semi-autonomous driving by a driver.

In embodiments of the present disclosure, a 'vehicle rear seat display device', which is a display device arranged in a rear seat of the vehicle 100, can be formed to be movable in different directions. The vehicle rear seat display device can include a plurality of drive modules for moving in different directions. Additionally, the vehicle rear seat display device can be formed to be tiltable at a predetermined angle with respect to a ceiling of the vehicle.

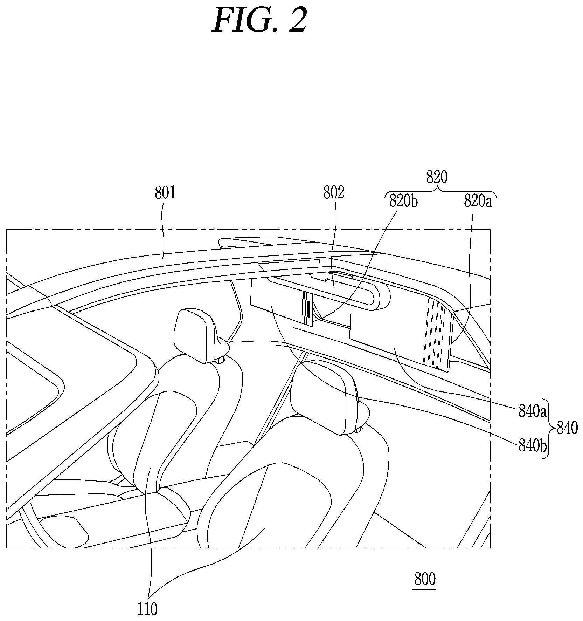

FIG. 2 is a drawing showing a vehicle rear seat display device 800 according to an embodiment of the present disclosure installed in the vehicle 100.

As shown in FIG. 2, the vehicle rear seat display device 800 can be formed such that a plurality of movable frames 840a, 840b connected to a fixed frame 801 installed on a ceiling from a front seat 110 toward a rear seat in the vehicle 100, and first and second display 820a, 820b are respectively arranged on front surfaces of the plurality of movable frames 840a, 840b.

Meanwhile, an angle adjustment part 860 can be mounted on a rear surface of the plurality of movable frames 840 to adjust an angle of the first and second displays 820a, 820b. Depending on the operation of the angle adjustment part 860, the first and second displays 820a, 820b can form a horizontal or vertical line with the fixed frame 801 as shown.

The plurality of movable frames 840 are formed to be movable in different directions. Accordingly, the first and second displays 820a, 820b arranged on front surfaces of the plurality of movable frames 840, respectively, can move in different directions.

Specifically, the plurality of movable frames 840 can move along a length direction of the fixed frame 801 installed on the ceiling to the front of the front seat or to the rear of the front seat (or the front of the rear seat). Accordingly, the first and second displays 820a, 820b are moved to the front of the front seat or to the front of the rear seat of the vehicle 100.

Additionally, the plurality of movable frames 840 can move closer to or away from each other. Accordingly, a spacing between the first and second displays 820a, 820b is adjusted so as to get closer to each other (or come into contact with each other) or away from each other.

As the plurality of movable frames 840 move toward the front of the front seat, when the first and second displays 820a, 820b are located in the front of the front seat of the vehicle 100, an occupant in the front seat (a driver and/or an occupant in the passenger seat) can receive a content service through the first and second displays 820a, 820b.

Meanwhile, when the plurality of movable frames 840 are located in the rear of the front seat as shown in FIG. 2, an occupant in the rear seat of the vehicle 100 can receive a content service through the first and second displays 820a, 820b.

Additionally, when the first and second displays 820a, 820b are spaced apart from each other, the occupant in the rear seat of the vehicle 100 can receive a content service through the first and second displays 820a, 820b as independent screens. That is, an occupant in a left rear seat can receive a content service through the first display 820a, and an occupant in a right rear seat can receive another content service through the second display 820b.

Meanwhile, when a spacing between the first and second displays 820a, 820b is adjusted to be closer, the entire first and second displays 820a, 820b can operate as a full screen. That is, when the first and second displays 820a, 820b come close to each other to come into contact, they can be switched to a full screen without additional screen control.

In another embodiment, when it is determined that there is no intention to use the first and second displays 820a, 820b, folding can be performed so as to allow the plurality of movable frames 840 to form a horizontal line with respect to the fixed frame 801 according to the operation of the angle adjustment part 860.

A state in which the plurality of movable frames 840 shown in FIG. 2 form a vertical line with the fixed frame 801 is defined as an "unfolding state." Additionally, although not shown, a state in which the plurality of movable frames 840 form a horizontal line with the fixed frame 801 is defined as a "folding state."

Referring to FIG. 2, a portion connected to the fixed frame 801 in the plurality of movable frames 840 remains fixed, and the plurality of movable frames 840 can be switched from an "unfolding state" to a "folding state" by rotating significantly toward the fixed frame 801 in a bent manner until they form a horizontal line with the fixed frame 801.

In this way, the vehicle rear seat display device 800 according to an embodiment of the present disclosure can be movable between the front and rear seats, and the plurality of displays can be movable to get closer to or away from each other, thereby allowing all occupants in the vehicle 100 to receive a content service through the rear seat display device 800.

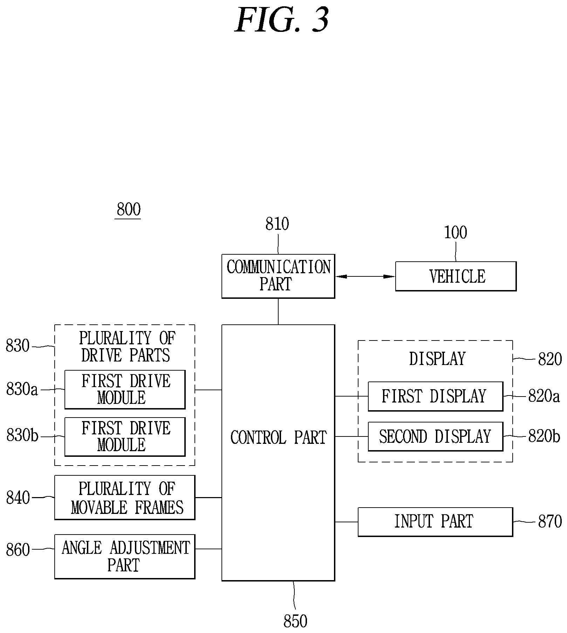

FIG. 3 is a block diagram for explaining a detailed configuration of the vehicle rear seat display device 800 according to an embodiment of the present disclosure.

The vehicle rear seat display device 800 can include a communication part 810, first and second displays 820a, 820b, first and second drive modules 830a, 830b, a plurality of movable frames 840, a control part 850, an angle adjustment part 860, and an input part 870. Additionally, the vehicle rear seat display device 800 can be connected to communicate with a system within the vehicle 100 through the communication part 810.

The communication part 810 can receive vehicle data and vehicle driving data by communicating with the vehicle 100, the system within the vehicle 100, various sensors within the vehicle 100, and various devices such as advanced driver assistance systems (ADAS) and a driver monitoring system (DMS).

Additionally, the communication part 810 can receive an input signal corresponding to an input applied to an input device installed in the vehicle 100 and transmit it to the control part 850. For example, the communication part 810 can receive a signal related to the driving of at least one of the first and second drive modules 830a, 830b of the rear seat display device 800 from an input device in conjunction therewith within the vehicle 100.

A display of the rear seat vehicle display device 800 is configured to include first and second displays 820a, 820b, each having a separate frame. The first and second displays 820a, 820b can respectively display different screens, display the same screen, or display a single connected screen.

The first and second displays 820a, 820b can be arranged on respective front surfaces of the plurality of movable frames 840 arranged side by side. In other words, rear surfaces of the first and second displays 820a, 820b can be arranged to be coupled to movable frames formed to be movable, respectively. Accordingly, as the plurality of movable frames 840 move, the coupled first and second displays 820a, 820b can also move together.

When the first and second displays 820a, 820b are used as independent screens, each screen can be controlled independently. Additionally, when the first and second displays 820a, 820b are used as a full screen, single integrated screen control can be performed.

In an embodiment, screen control of the first and second displays 820a, 820b can be performed based on a movement according to the driving of the first and second drive modules 830a, 830b. For example, when the first and second displays 820a, 820b move toward the front seat or the rear seat according to the driving of the first drive module 830a, the type of content displayed can vary. Additionally, for example, when the first and second displays 820a, 820b move closer to or away from each other depending on the driving of the second drive module 830b, a screen mode (e.g., full screen mode) of the displays can vary.

The first and second drive modules 830a, 830b provide driving forces to move the plurality of movable frames 840 so as to allow the first and second displays 820a, 820b to move in a first direction or in a second direction. Specifically, the first drive module 830a can transmit a driving force to the plurality of movable frames 840 so as to allow the first and second displays 820a, 820b to move in a first direction, that is, together toward the front seat or toward the rear seat. Additionally, the second drive module 830b can provide a driving force to the plurality of movable frames 840 so as to allow the first and second displays 820a, 820b to move in a second direction, that is, a direction of getting closer to or away from each other.

The first and second displays 820a, 820b are respectively arranged on front surfaces of the plurality of movable frames 840. One side of the plurality of movable frames 840 is connected in contact with one side of the fixed frame 801 (FIG. 2) that connects the front and rear seats of the vehicle ceiling. Accordingly, when the first drive module 830a is driven, the plurality of movable frames 840 can be operated to move along a length direction of the fixed frame 801.

The plurality of movable frames 840 can be arranged side by side with a predetermined spacing and formed to be supported by the same support frame located on rear surfaces thereof. Accordingly, when the second drive module 830b is driven, the plurality of movable frames 840 can move closer to each other while being supported by the same support frame, or move again to have a predetermined spacing.

The control part 850 controls an overall operation of the vehicle rear seat display device 800. The control part 850 can be named a processor or PC, and can be arranged, for example, within a housing located between the front seats inside the vehicle 100.

The control part 850 can control the driving of the first and second drive modules 830a, 830b and the screens of the first and second displays 820a, 820b. In an embodiment, the control part 850 can control the first drive module 830a to move the first and second displays 820a, 820b together in a first direction in response to a first input signal. Additionally, the control part 850 can control the second drive module 830b in response to a second input signal different from the first input signal such that the first and second displays 820a, 820b move in a second direction different from the first direction to get away from or closer to each other.

The angle adjustment part 860 can be located between a fixed frame located on rear surfaces of the plurality of movable frames 840 and a fixed frame 801 (FIG. 2) formed on the ceiling of the vehicle.

The angle adjustment part 860 is coupled to one side of the plurality of movable frames 840 so as to allow the plurality of movable frames 840 to operate to form a predetermined angle with respect to the fixed frame 801. Specifically, the angle adjustment part 860 provides a driving force for the plurality of movable frames 840 to rotate such that the plurality of movable frames 840 form a horizontal or vertical line with the fixed frame 801, or form a set angle between horizontal and vertical.

The input part 870 can be arranged on one side within the vehicle 100 so as to be spaced apart from the first and second displays 820a, 820b. The input part 870 can be configured to include a plurality of buttons corresponding to respective directions or to include a manipulation unit capable of tilting/moving in a plurality of directions to control a movement direction of the first and second displays 820a, 820b.

In an embodiment, when a first input signal is generated based on a first input to the input part 870, the control part 850 can drive the first drive module 830a to control the first and second displays 820a, 820b to move together in a first direction. Additionally, when a second input signal is generated based on a second input to the input part 870, the control part 850 can drive the second drive module 830b to control the first and second displays 820a, 820b to move in a second direction of getting closer to or away from each other.

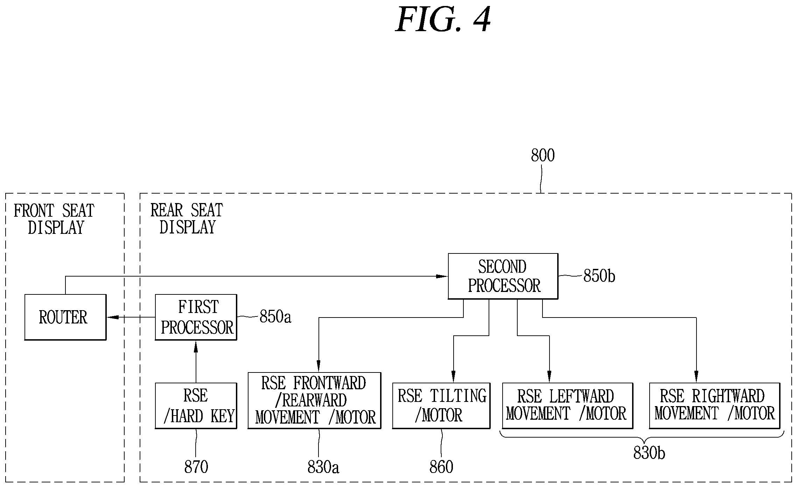

FIG. 4 is a conceptual diagram for explaining a movement operation of the vehicle rear seat display device 800 and a compatibility with a front seat display device according to an embodiment of the present disclosure.

The vehicle rear seat display device 800 can be used by an occupant in the rear seat, or can be operated to move toward the front seat so as to allow an occupant in the front seat to use it.

To this end, the vehicle rear seat display device 800 can communicate with another display device located in the front seat via a router. Additionally, the vehicle rear seat display device 800 can determine whether to move the vehicle rear seat display device 800 based on a result of communication with another display device.

Specifically, when an input is received at the input part 870 of the rear seat display device 800, for example, a hard key or a touch screen, a first processor 850a can transmit a signal corresponding to the received input to a second processor 850b through a router. In this case, the first processor 850a can be, for example, an NVIDIA SYSTEM, and the second processor 850b can be, for example, a mini PC.

As another example, the first processor 850a can directly transmit a drive signal for forward/backward movement of the first and second displays 820a, 820b corresponding to the received input to the first drive module 830a. Accordingly, a motor of the first drive module 830a is driven to generate a driving force so as to move the first and second displays 820a, 820b in a forward/backward direction.

Meanwhile, the functions of the first and second processors 850a, 850b shown in FIG. 4 can be swapped with each other, divided to perform some operations, or performed by a single processor 850.

In addition, the same request input as an input to the input part 870 can be made through a display of the front seat or a manipulation unit of the front seat of the vehicle 100. In this case, similar to the foregoing description, a signal corresponding to the input is transmitted to a processor of the vehicle rear seat display device 800 through a router, thereby allowing the motor of the first drive module 830a to move the first and second displays 820a, 820b back and forth.

Additionally, the vehicle rear seat display device 800 can be used as a plurality of independent screens for respective occupants in the rear seat to use, or as a full screen to display a single connected image by moving the plurality of screens so as to get closer to each other.

To this end, the vehicle rear seat display device 800 can drive the motor of the second drive module 830b such that the first and second displays 820a, 820b move closer to or away from each other, based on a signal corresponding to another input applied to the input part 870 as shown in FIG. 4 being transmitted to the first and/or second processor 850a, 850b (or processor 850).

In this case, respective movable frames 840 (FIG. 2) on which the first and second displays 820a, 820b are arranged include separate drive motors because they move in a direction of getting closer to each other or in a direction of getting away from each other. Furthermore, motors matching respective movable frames 840 rotate in opposite directions, thereby allowing the plurality of movable frames 840 to gradually get closer to or away from each other.

Additionally, in an embodiment, the vehicle rear seat display device 800 can adjust the angle adjustment part 860 so as to allow the first and second displays 820a, 820b to form a predetermined angle with respect to the fixed frame 801 (FIG. 2) arranged on the ceiling of the vehicle 100. The angle adjustment part 860 can operate to tilt the first and second displays 820a, 820b by driving a motor so as to allow the plurality of movable frames 840 to form an angle with the fixed frame 801 that is horizontal, vertical, or in between.

For example, when the first and second displays 820a, 820b of the vehicle rear seat display device 800 are moved to the front of the front seat of the vehicle, it is transmitted to a front seat display and system through a router, and the angle adjustment part 860 can operate so as to allow the plurality of movable frames 840 to form a predetermined angle between the horizontal and vertical with the fixed frame 801.

Additionally, for example, before the first and second displays 820a, 820b of the vehicle rear seat display device 800 move to the front of the front seat or the front of the rear seat of the vehicle, the angle adjustment part 860 can be operated so as to allow the plurality of movable frames 840 to form a horizontal line with the fixed frame 801.

Meanwhile, although not shown in detail, when the front seat display is operated in a driving state of the vehicle, the processor 850 can limit the driving of the first drive module 830a so as not to allow the first and second displays 820a, 820b of the vehicle rear seat display device 800 to move toward the front of the front seat of the vehicle. Accordingly, driving safety is not compromised.

Similarly, when the front seat display is operated in a manual driving state of the vehicle, the processor 850 can limit the driving of the second drive module 830b so as not to allow the first and second displays 820a, 820b of the vehicle rear seat display device 800 to move in a direction of getting closer to each other. Accordingly, the first and second displays 820a, 820b do not obstruct a rearview mirror during manual driving by the driver.

As described above, the vehicle rear seat display device 800 according to an embodiment of the present disclosure provides more extended usability by driving the first and second displays 820a, 820b to move in different directions or form a predetermined angle in conjunction with the front seat display of the vehicle. Additionally, by restricting the movement of the first and second displays 820a, 820b according to the operation of the front seat display according to the driving state of the vehicle, the service can be provided in consideration of the driving safety of the vehicle.

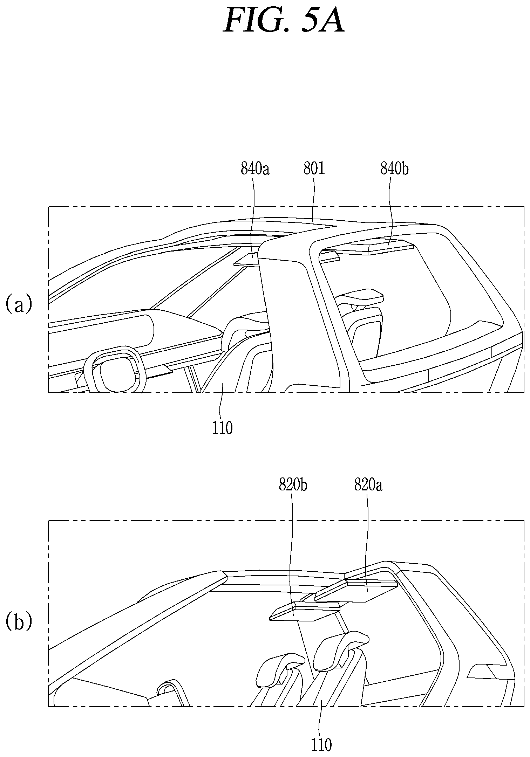

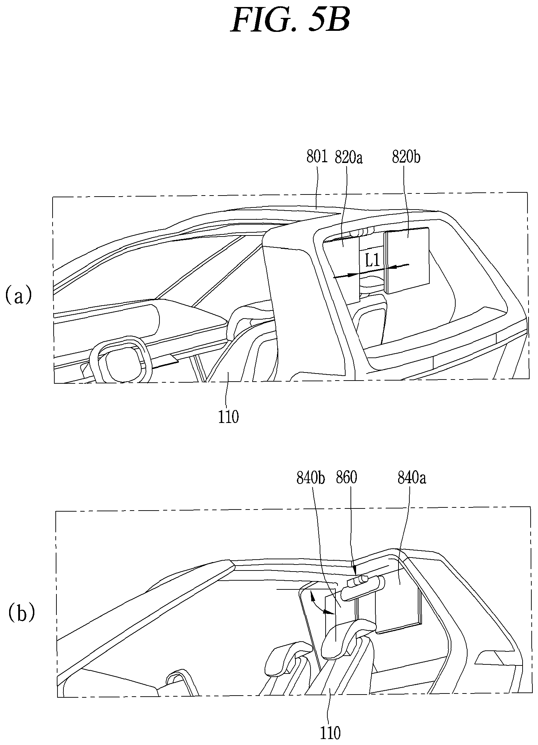

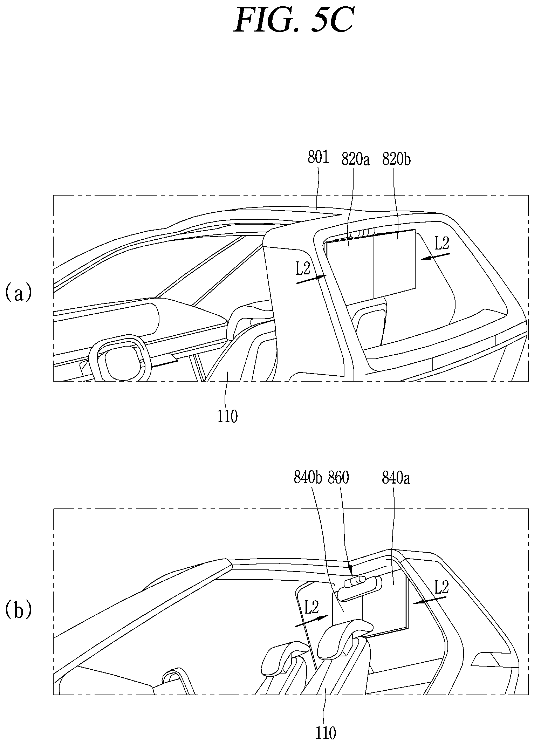

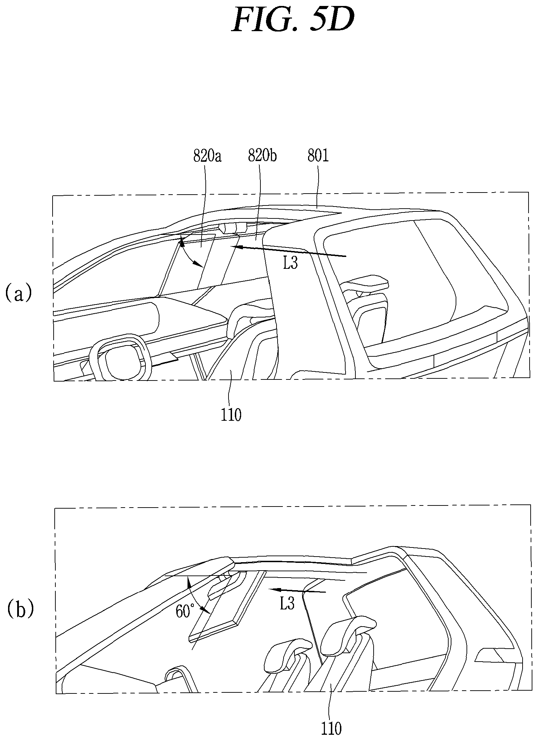

Hereinafter, FIGS. 5A, 5B, 5C and 5D are conceptual views for explaining that the vehicle rear seat display device 800 moves in different directions and adjusts its angle.

The vehicle rear seat display device 800 can be used as an integrated full screen or as a plurality of independent screens by moving in a direction of getting closer to or away from each other at a position corresponding to the rear seat of the vehicle.

Additionally, the vehicle rear seat display device 800 moves to a position corresponding to the front seat of the vehicle or moves back to a position corresponding to the rear seat, thereby providing extended usability such that not only an occupant in the rear seat but also an occupant in the front seat can use a plurality of screens.

Furthermore, when the rear seat display device 800 is not using the screen, or when it is used by the occupant in the front seat of the vehicle, it operates such that a plurality of screens form a predetermined angle, thereby efficiently using the vehicle space and providing comfortable audiovisual viewing to the occupant in the front seat.

FIG. 5A is an example drawing showing an initial state of the vehicle rear seat display device 800.

In an initial state of the vehicle rear seat display device 800, the first and second displays 820a, 820b are located at the rear of the vehicle front seat (or the front of the rear seat), and one side thereof is coupled to the fixed frame 801 of the ceiling (FIG. 2) to maintain a horizontal state. Accordingly, as shown in (a) of FIG. 5A, a plurality of movable frames 840a, 840b face the ceiling of the vehicle, and as shown in (b) of FIG. 5A, front surfaces of the first and second displays 820a, 820b faces the floor of the vehicle.

FIG. 5B is an example drawing showing a state in which occupants in the rear seat are respectively using the vehicle rear seat display device 800. That is, FIG. 5B is an example in which the first and second displays 820a, 820b of the vehicle rear seat display device 800 are used as a plurality of independent screens in the rear seat.

The first and second displays 820a, 820b are maintained apart by a predetermined separation distance L1 and are maintained in a vertical state with respect to the fixed frame 801 (FIG. 5B) of the ceiling (a).

In this case, the first display 820a is displayed for a left occupant in the rear seat, and the second display 820b is displayed for a right occupant in the rear seat. Additionally, only one of the first and second displays 820a, 820b can be activated while the other remains in a deactivated state. Additionally, the first and second displays 820a, 820b can be used as a plurality of independent screens, respectively, and can simultaneously display the same content screen. Additionally, in an embodiment, a screen displayed on one of the first and second displays 820a, 820b can be transmitted to the other.

Additionally, in FIG. 5B, the plurality of movable frames 840a, 840b are located on rear surfaces of the first and second displays 820a, 820b to face the front seat of the vehicle 100 (b). Additionally, the angle adjustment part 860 coupled to a portion of the plurality of movable frames 840a, 840b and a portion of the fixed frame 801 supports the plurality of movable frames 840a, 840b to maintain a horizontal state with respect to the fixed frame 801.

FIG. 5C is an example drawing showing a state in which a plurality of screens of the rear seat display device 800 are moved so as to get closer to each other to operate as a full screen.

Each of the plurality of movable frames 840a, 840b includes a motor, and each motor in conjunction therewith rotates in a different direction such that the first and second displays 820a, 820b move in a direction L2 of getting closer to each other based on a control signal of the processor 850 (a). When one side surfaces of the first and second displays 820a, 820b come into contact with each other, the operation of each motor in conjunction therewith is stopped. The processor 850 can control the screens such that the first and second displays 820a, 820b display a single image in full screen, or display an execution screen of the same application on the plurality of screens.

While the plurality of movable frames 840a, 840b move in a direction of getting closer to each other according to the operation of the second drive module 830b located on rear surfaces thereof, the fixed frame 801 on the ceiling, the angle adjustment part 860 connected thereto, and a fixed frame on a rear surface included in the second drive module 830b are formed to support the plurality of movable frames 840a, 840b (b).

Meanwhile, as shown in FIG. 5C, the movement of the first and second displays 820a, 820b so as to get closer to each other can be operated such that the first and second displays 820a, 820b move to the front of the vehicle front seat. In other words, while the plurality of movable frames 840 move back and forth along a length direction of the fixed frame 801 of the ceiling, the first and second displays 820a, 820b move together while maintaining contact with each other.

Next, FIG. 5D is an example drawing showing a state in which a plurality of screens of the rear seat display device 800 move toward the front seat so as to be used by an occupant in the front seat.

Referring to FIG. 5D, the first and second displays 820a, 820b move toward the front seat 110 along a length direction L3 of the fixed frame of the vehicle ceiling according to the driving of the first drive module 830a. In this case, front surfaces of the first and second displays 820a, 820b faces the floor and the plurality of movable frames are tilted to face the ceiling and move in a folded state while facing the fixed frame 801 of the ceiling (a).

When the movement is completed by reaching an end of the length direction L3 of the fixed frame 801, the first and second displays 820a, 820b are unfolded at an angle that can be viewed by an occupant of the front seat 110 and operate to form a predetermined angle with the fixed frame 801 of the ceiling (d).

Meanwhile, although not shown, a movement operation similar to the above can be performed even when the first and second displays 820a, 820b move from the front seat 110 toward the rear seat. Specifically, the first and second displays 820a, 820b tilted for the occupant of the front seat 110 are folded so as to form a horizontal line again with the fixed frame 801 of the ceiling, and then move toward the rear seat along the length direction L3 of the fixed frame 801. When the movement is completed by reaching the end of the length direction L3 of the fixed frame 801, it can be unfolded to maintain an initial state described with reference to FIG. 5A or to form a vertical line with the fixed frame 801 of the ceiling so as to be used by the occupant of the rear seat.

The vehicle rear seat display device 800 according to an embodiment of the present disclosure operates such that a plurality of drive parts, that is, the first drive module 830a and the second drive module 830b, move the first and second displays 820a, 820b in different directions according to their respective driving.

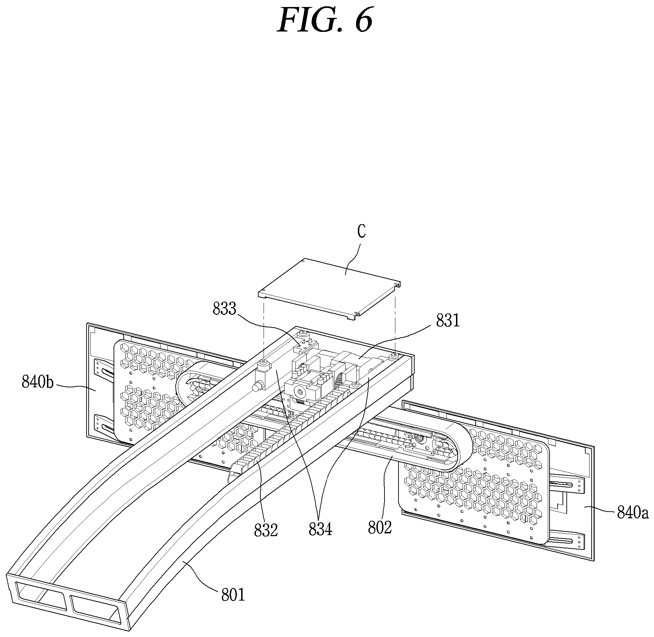

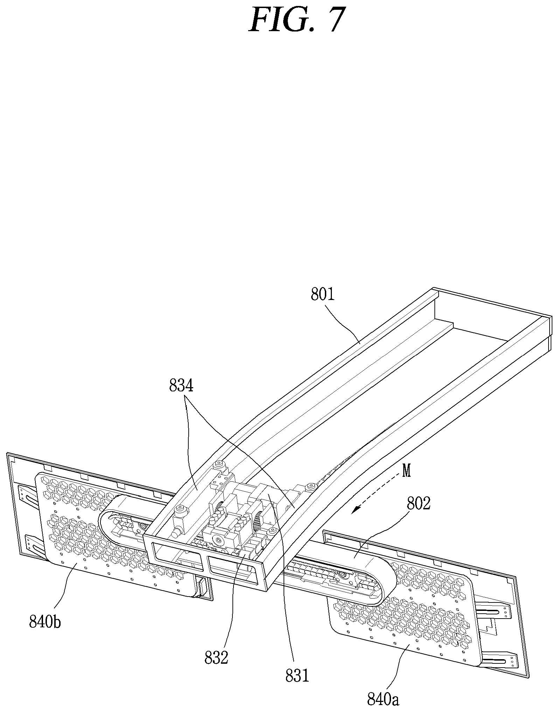

FIGS. 6 and 7 are drawings for explaining a structure and operation of the first drive module 830a (FIG. 2) of the vehicle rear seat display device 800.

The first drive module 830a can include a plurality of movable frames 840a, 840b and a first motor 831, and operate such that the plurality of movable frames 840 move along a guide rail 834 formed on the first fixed frame 801 based on a driving force of the first motor 831.

The first drive module 830a is arranged to move together with the plurality of movable frames 840 along a guide rail formed on the first fixed frame 801. The first drive module 830a drives the first and second displays 820a, 820b coupled to match front surfaces of the plurality of movable frames 840, respectively, to move in a first direction.

Here, the first direction can be a direction of movement between the front and rear seats of the vehicle 100. Specifically, the first direction can be a direction of moving from the rear seat of the vehicle 100 toward the front seat, or moving from the front seat of the vehicle 100 toward the rear seat.

Additionally, the first direction can be a direction in which the plurality of movable frames 840a, 840b move along a length direction of the first fixed frame 801.

Additionally, the first direction can be a direction in which the plurality of movable frames 840a, 840b move from one end (other end) of the first fixed frame 801 to the other end (one end) thereof.

The first fixed frame 801 can be installed on the ceiling within the vehicle 100 and formed to be elongated in a front-rear direction to connect a front of the front seat and a front of the rear seat of the vehicle.

Specifically, the first fixed frame 801 is installed on the ceiling of the vehicle 100, and formed to connect the front of the front seat and the front of the rear seat in an elongated manner. For example, the first fixed frame 801 can be arranged to be elongated between the front seats and the rear seats. Additionally, the first fixed frame 801 can be made of a metal material. The first fixed frame 801 can have a bar structure formed to be elongated in a length direction, for example, having a length of 740 mm in a length direction and a width of 230 mm.

The first and second display 820a, 820b are respectively coupled to front surfaces of the plurality of movable frames 840. Thus, the first and second displays 820a, 820b can move together when the plurality of movable frames 840 move in the first direction according to an operation of the first drive module 830a.

The plurality of movable frames 840 can have a plurality of support fixtures for supporting the first and second displays 820a, 820b arranged on front surfaces thereof. That is, the first and second displays 820a, 820b can be coupled to the movable frames 840a, 840b, respectively, through the plurality of support fixtures.

A second fixed frame 802 is arranged on rear surfaces of the plurality of movable frames 840 to support the rear surfaces of the plurality of movable frames 840. A plurality of pores or holes can be formed on the rear surfaces of the plurality of movable frames 840.

The guide rails 834 are formed on an inner side of the first fixed frame 801 to guide the movement of the plurality of movable frames 840 according to the operation of the first drive module 830a. The guide rails 834 can be formed on both inner sides thereof along a length direction of the first fixed frame 801.

The first motor 831 of the first drive module 830a can be mounted on an inner side of the first fixed frame 801. The first motor 831 can be arranged in a direction parallel to the plurality of movable frames 840.

When the first motor 831 is driven based on electrical power supplied from the control part 850 (FIG. 2), the plurality of movable frames 840a, 840b arranged side by side move along the guide rail 834 formed on an inner side of the first fixed frame 801 or together with the guide rail 834 in a first direction, for example, in a length direction or in a direction from one of the front and the rear seats of the vehicle 100 to the other. When the electrical power applied to the first motor 831 is stopped, the rotation of the first motor 831 is stopped, and the movement of the plurality of movable frames 840a, 840b is terminated.

The first drive module 830a can include a first cableveyor 832 on an inner side of the first fixed frame 801. The second cableveyor 832 can be formed as a rail structure including a plurality of unit chains connected to be mutually rotatable as shown in FIG. 6.

One side of the first cableveyor 832 can be fixed to a portion of the first fixed frame 801, for example, at a point on a guide rail formed on an inner frame. Additionally, the other side of the first cableveyor 832 can be coupled to a rear side of the first motor 831.

When the plurality of movable frames 840 move in a first direction along the guide rail according to the driving of the first motor 831, a plurality of chains included in the first cableveyor 832 gradually move together in the same direction as the plurality of movable frames 840. Accordingly, one side of the first cableveyor 832 moves along the first motor 831 of the first cableveyor 832 while being fixed at an inner point of the first fixed frame 801.

The plurality of unit chains included in the first cableveyor 832 can also be named as transfer rollers for transferring the plurality of movable frames 840. The first cableveyor 832 can be made of a material different from that of the plurality of movable frames 840, for example, an elastic material.

Referring to FIG. 7, the plurality of unit chains move the plurality of movable frames 840 simultaneously in a first direction M according to the driving of the first motor 831 connected to the other side of the first cableveyor 832. In this case, the plurality of unit chains are fixed to the first fixed frame 801, and in this sense, the first fixed frame 801 can function as a support fixture for the first cableveyor 832.

Additionally, the first cableveyor 832 can further include a first cableveyor connection module (not shown) for connecting to an inner point of the first fixed frame 801. Accordingly, while the plurality of movable frames 840 move back and forth together with the guide rail 834 of the first fixed frame 801, one side of the first cableveyor 832 can be firmly fixed to the first fixed frame 801. Additionally, the first cableveyor 832 can move back and forth in conjunction with the plurality of movable frames 840. When moving forward/backward with the plurality of movable frames 840, the plurality of unit chains of the first cableveyor 832 are formed to gradually move along.

A cover C can be formed above the first fixed frame 801 in which the first motor 831 is arranged. The cover C can be formed in a structure that is coupled to both sides of the guide rail 834 formed on an inner side of the first fixed frame 801 to move together with the first motor 831 and the guide rail 834 according to the driving of the first drive module 830a.

The guide rail 834 formed on the first fixed frame 801 can form a rail structure customized to the first motor 831 of the first drive module 830a. Accordingly, when the first drive module 830a is driven, the guide rail 834 can be operated to move together with the first motor 831 along the rail structure formed on the inner side of the first fixed frame 801. For example, the guide rail 834 can be configured to move along rails formed on both inner sides of the first fixed frame 801 together with other components of the first drive module 830a.

FIG. 7 shows a state in which the first motor 831, the guide rail 834, and some chains of the first cableveyor 832 are moved in a first direction M together with the plurality of movable frames 840a, 840b according to the driving of the first drive module 830a.

Although not shown, as it moves in the first direction M, the plurality of movable frames 840a, 840b are located in the front of the front seat. The first and second displays 820a, 820b arranged on front surfaces of the plurality of movable frames 840a, 840b are located in the front of an occupant in the front seat, and the occupant in the front seat can use them. In this case, the second fixed frame 802 arranged on rear surfaces of the plurality of movable frames 802 also moves in the first direction M along the plurality of movable frames 804. Additionally, although not shown, the cover C shown in FIG. 6 also moves together in the first direction M while being coupled to the guide rail 834. Additionally, one side of the first cableveyor 832 remains fixed at a point on an inner side of the first fixed frame 801, and the other side moves together in the first direction M along the first motor 831.

Meanwhile, referring to FIG. 6, a rotation shaft (drive shaft) of the first motor 831 can operate in conjunction with a rack and pinion gear module 833 formed on one side of the guide rail 834. Specifically, a pinion protruding to engage with the drive shaft of the first motor 831 can engage with a rack formed on one side of the guide rail 834 to form a fastening structure that drives according to the rotation of the first motor 831.

A rack formed on one side of the guide rail 834 of the first fixed frame 801 is formed along one side in a length direction of the guide rail 834, and is structured to include a plurality of teeth that rotate in conjunction with a pinion coupled to the drive shaft of a first motor 831.

The driving of the rack and pinion gear module 833 is performed by receiving a driving force according to the rotation driving of the first motor 831. Specifically, when the first drive module 830a is driven, the pinion coupled to the rotation shaft rotates while the rotation shaft of the first motor 831 rotates. Furthermore, as the rotating pinion engages sequentially with a plurality of teeth formed on the rack, the plurality of movable frames 840a, 840b move in the first direction M.

The first drive module 830a is driven based on a drive signal transmitted from the control part 850. The rotation shaft of the first motor 831 to which electrical power is applied rotates in a direction corresponding to the detailed direction included in the drive signal so as to allow the plurality of movable frames 840 receiving the driving force to move in a forward/backward direction.

For example, the plurality of movable frames 840 can move in the first direction shown in FIGS. 6 and 7, for example, from the rear seat to the front seat of the vehicle 100, according to a first rotation direction of the first motor 831. Alternatively, the plurality of movable frames 840 can move, for example, in a direction toward the rear seat from the front seat of the vehicle 100 again, according to a second rotation direction opposite to the first rotation direction. Here, one of the first and second rotation directions can be clockwise and the other can be counterclockwise.

Meanwhile, in an embodiment of the present disclosure, the guide rail 833 is included as a component of the first drive module 830a to be implemented to move together with the plurality of movable frames 840a, 840b according to the driving of the first motor 831.

In other words, the first drive module 830a includes a first motor 831, a first cableveyor 832, a rack and pinion gear module 833, and a guide rail 834, and operates to move together with the plurality of movable frames 840 along a rail formed on the first fixed frame 801 when the first drive module 830a is driven.

In an embodiment, the control part 850 (FIG. 2) of the vehicle rear seat display device 800 controls the first drive module 830a (FIG. 2) to move along the inner rail of the first fixed frame 801 together with a plurality of movable frames 840 in a first direction from one of the front and rear seats of the vehicle 100 toward a position corresponding to the other. That is, the guide rail 833 moves in a first direction along the rails formed on both side surfaces on an inner side of the first fixed frame 801 together with the first motor 831.

In an embodiment, the control part 850 of the vehicle rear seat display device 800 can control electrical power applied to the first motor 831 to adjust a rotational speed of the first motor 831. Accordingly, a rotational speed and/or a distance of movement of the plurality of movable frames 840a, 840b moving in the first direction can vary.

Meanwhile, the vehicle rear seat display device 800 according to an embodiment of the present disclosure can perform an angle adjustment operation for the plurality of movable frames 840 to form a predetermined angle with respect to the ceiling before and/or after the driving of the first drive module 830a. To this end, the vehicle rear seat display device 800 can include an angle adjustment part 860, that is, a third drive module 860, arranged adjacent to the first drive module 830a.

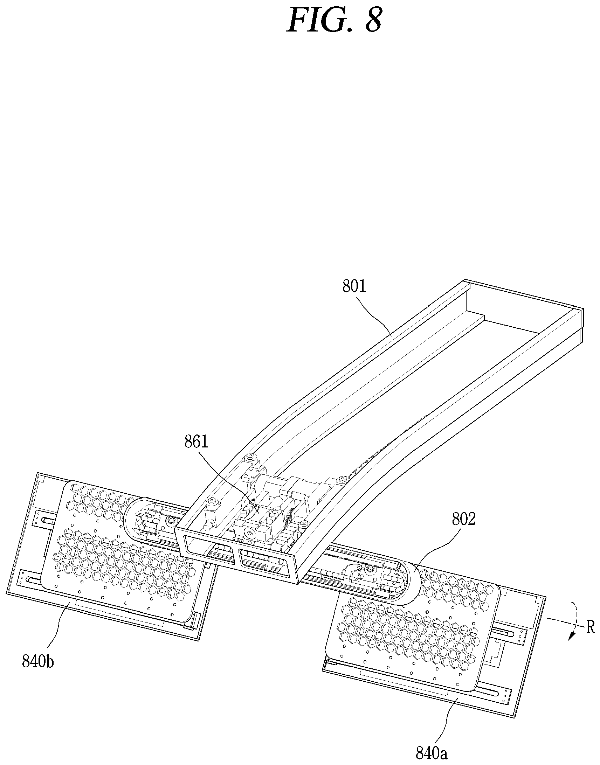

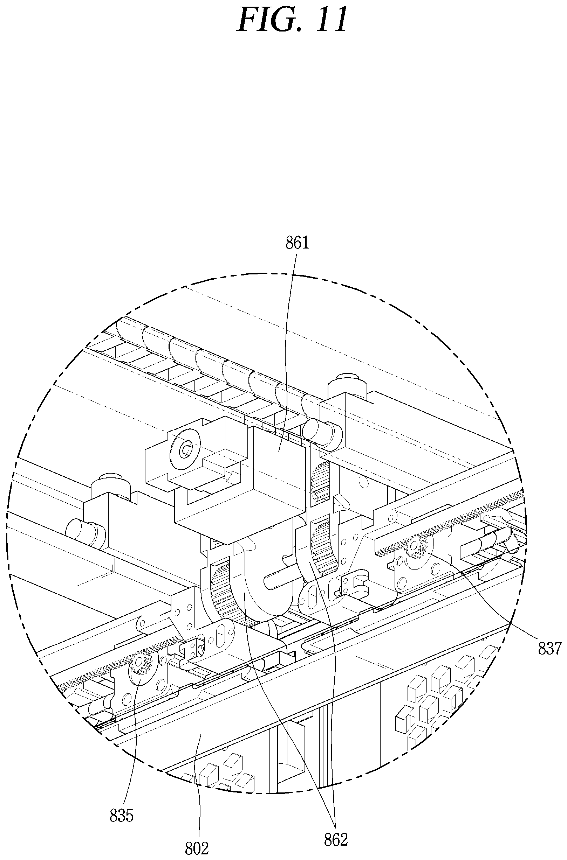

FIG. 8 is a drawing for explaining an angle adjustment operation after an operation of the first drive module 830a according to an embodiment of the present disclosure. Here, an operation of angle adjustment after an operation of the first drive module 830a will be mainly described, and a structure and operation of the third drive module 860 will be described in more detail below with reference to FIGS. 11 to 13.

Referring to FIG. 8, a fourth motor 861 is arranged in a direction orthogonal to the first motor 831, and the fourth motor 861 is formed to move together with the first motor 831 when the first drive module 830a moves. The fourth motor 861 is located on an inner side of the first fixed frame 801 in alignment with the first motor 831 and is arranged parallel to a length direction of the first fixed frame 801.

The fourth motor 861 provides a driving force for the plurality of movable frames 840a, 840b to move to form a predetermined angle with respect to the ceiling. To this end, the fourth motor 861 is coupled to the second fixed frame 802 that supports rear surfaces of the plurality of movable frames 840a, 840b.

The fourth motor 861 can be operated to be driven after the movement of the plurality of movable frames 840a, 840b is completed according to the driving of the first drive module 830a.

In an embodiment, while the plurality of movable frames 840a, 840b move in a first direction according to the driving of the first drive module 830a, the plurality of movable frames 840a, 840b can be in a folded state parallel to the ceiling of the vehicle 100.

After the plurality of movable frames 840a, 840b move in the first direction M (FIG. 7), an unfolding operation of the plurality of movable frames 840a, 840b can then be performed according to the operation of the third drive module 860. Here, the unfolding operation refers to an operation in which the plurality of movable frames 840a, 840b are folded away from the first fixed frame 801 in a horizontal direction.

The plurality of movable frames 840a, 840b rotate (R) in a direction of getting away from the first fixed frame 801 according to the driving of the fourth motor 861. Accordingly, an interval angle between the first fixed frame 801 and the plurality of movable frames 840a, 840b can be unfolded to form, for example, 120 degrees. In this case, an interval angle between a rear surface and the ceiling of the plurality of movable frames 840a, 840b can be, for example, 60 degrees.

In this unfolding operation, the fourth motor 861 can be named a tilting motor in that it allows the plurality of movable frames 840a, 840b to tilt in a specific direction in place.

During the unfolded operation of the plurality of movable frames 840a, 840b, the second fixed frame 802 supporting rear surfaces of the plurality of movable frames 840a, 840b is also unfolded together. In this way, after the plurality of movable frames 840a, 840b move in the first direction M (FIG. 7) according to the driving of the first drive module 830a, an unfolding operation can be additionally performed, thereby allowing the occupant in the front seat to view the first and second displays 820a, 820b coupled to the front surfaces of the plurality of movable frames 840a, 840b in a comfortable posture.

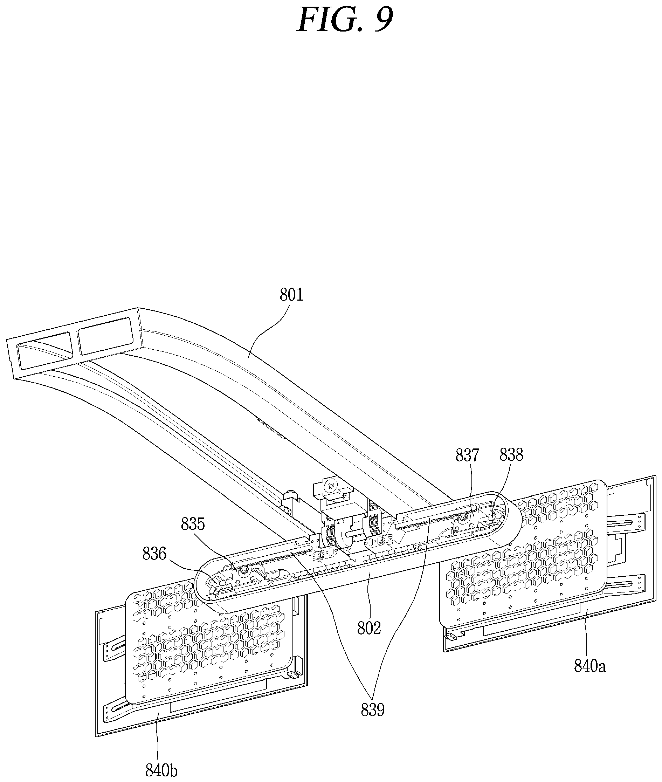

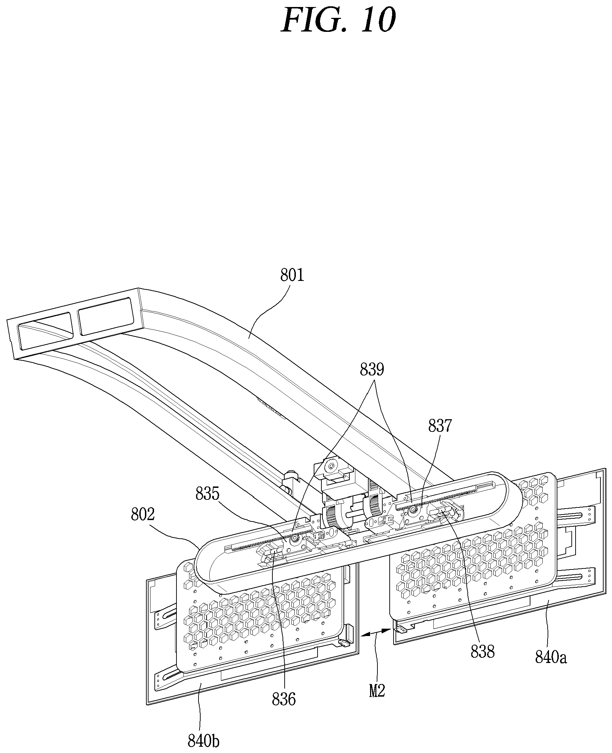

FIGS. 9 and 10 are drawings for explaining a structure and operation of the second drive module 830b according to an embodiment of the present disclosure.

The second drive module 830b includes a plurality of movable frames 840a, 840b, a second fixed frame 802, and second and third motors 835, 837, and operates such that the plurality of movable frames 840 move in a direction of getting closer to or away from each other along a guide rail 839 formed on the second fixed frame 802 according to the simultaneous driving of the second and third motors 835, 837.

The second drive module 830b is arranged to move together with the plurality of movable frames 840 along a guide rail formed on the second fixed frame 802.

To this end, the second fixed frame 802 includes second and third motors 835, 837 in conjunction with the plurality of movable frames 840a, 840b, respectively. In this case, the second and third motors 835, 837 are arranged in the same direction on the same line within the second fixed frame 802. Additionally, the second and third motors 835, 837 are arranged in a direction orthogonal to the plurality of movable frames 840 within the second fixed frame 802.

The second motor 837 arranged on one side within the second fixed frame 802 operates in conjunction with the movable frame 840a coupled to the first display 820a on a front surface thereof. Additionally, the third motor 835 arranged on the other side within the second fixed frame 802 operates in conjunction with the movable frame 840b coupled to the second display 820b on a front surface thereof.

Thus, when the second drive module 830b is driven, a driving force of the second motor 837 is transmitted to the movable frame 840a, and a driving force of the third motor 835 is transmitted to the movable frame 840b so as to allow the plurality of movable frames 840 to move simultaneously in a second direction of getting closer to or away from each other.

A second cableveyor 838 in conjunction with the second motor 837 and a third cableveyor 836 in conjunction with the third motor 835 are arranged in the second fixed frame 802.

Additionally, rack and pinion gear modules 839 in conjunction with the second motor 837 and the third motor 835, respectively, are disposed in the second fixed frame 802. The second motor 837 and the third motor 835 respectively apply driving forces to the rack and pinion gear modules 839, respectively, to allow the movable frames 840a, 840b in conjunction therewith to move simultaneously in different directions.

To this end, the second motor 837 and the third motor 835 rotate in different rotation directions. For example, as the second drive module 830b is driven, the second motor 837 rotates in the first rotation direction and the third motor 835 rotates simultaneously in the second rotation direction. In this case, one of the first and second rotation directions can be clockwise and the other can be counterclockwise. In this way, the second and third motors 835, 837 rotate simultaneously in different directions according to the driving of the second drive module 830b, thereby operating such that the plurality of movable frames 840 in conjunction therewith move simultaneously in different directions.

In this case, a maximum separation distance between the plurality of movable frames 840 can be, for example, 234 mm. In this state, the plurality of movable frames 840 can be respectively moved so as to be close to each other by a distance of up to 117 mm such that one side surfaces of the plurality of movable frames 840 can be in contact with each other.

The second and third motors 835, 837 apply driving forces to the rack and pinion gear modules 839 in conjunction therewith such that the plurality of movable frames 840a, 840b in conjunction therewith respectively move in a second direction along the guide rail formed on an inner side of the second fixed frame 802.

Here, the second direction is determined by the second motor 837 and the third motor 835 rotating in different rotation directions. That is, as the second motor 837 and the third motor 835 rotate simultaneously in different rotation directions, it refers to a direction in which the plurality of movable frames 840 move closer to or away from each other.

Additionally, the second direction can be a direction in which the plurality of movable frames 840 move simultaneously in a horizontal direction (transverse direction) so as to move closer to or away from each other.

Additionally, the second direction can be a direction in which both side surfaces of the plurality of movable frames 840 arranged to be spaced apart from each other are moved so as to be in contact with each other.

Additionally, the second direction can be a direction in which the plurality of movable frames 840 arranged to come into contact with each other move horizontally with each other so as to have a predetermined separation distance. In this case, a horizontal distance of movement of the plurality of movable frames 840 can be, for example, 170 mm.

The second drive module 830b can be arranged within the second fixed frame 802 that supports rear surfaces of the plurality of movable frames 840. The second fixed frame 802 can include the second and third cableveyors 836, 838 that move in conjunction with the second and third motors 835, 837, respectively.

The second drive module 830b is coupled to one side of the first fixed frame 801, and the plurality of movable frames 840a, 840b are respectively arranged to move along the plurality of guide rails formed on the second fixed frame 802 together with the second and third motors 835, 837.

The second drive module 830b is formed in a structure that moves together with the plurality of movable frames 840 when the first drive module 830a is driven. Additionally, the second drive module 830b is located within the second fixed frame 802, and the second fixed frame 802 forms a structure coupled to support the rear surfaces of the plurality of movable frames 840.

One side of the second fixed frame 802, for example, a top thereof, can be coupled to the third drive module 860 arranged on the first fixed frame 801. Additionally, a front surface of the second fixed frame 802 can be coupled to the plurality of movable frames 840.

According to the driving of the second drive module 830b, the second motor 837 arranged on one side within the second fixed frame 802 moves along an internal guide rail between one side and the center within the second fixed frame 802. At the same time, the third motor 835 arranged on the other side within the second fixed frame 802 moves along an internal guide rail between the other side and the center within the second fixed frame 802. Accordingly, when the plurality of movable frames 840 move in a second direction so as to get closer to each other, the second and third motors 835, 837 in the second fixed frame 802 also move so as to get closer to each other. Additionally, when the plurality of movable frames 840 move in the second direction so as to get away from each other, the second and third motors 835, 837 within the second fixed frame 802 also move so as to get away from each other.

A plurality of guide rails formed within the second fixed frame 802 guide the movement of the second and third motors 835, 837. Specifically, pinions coupled to the drive shafts of the second and third motors 835, 837, respectively, engage with the teeth of racks formed on lower sides of the plurality of guide rails, respectively, and help the second and third motors 835, 837 and the plurality of movable frames 840 in conjunction therewith move smoothly.

Meanwhile, the second drive module 830b includes second and third cableveyors 836, 838 arranged within the second fixed frame 802. The second cableveyor 838 operates in conjunction with the second motor 837, and the third cableveyor 836 operates in conjunction with the third motor 835.

One side of the second cableveyor 838 is coupled to the second motor 837, and the other side thereof is fixed to the center of the second fixed frame 802. When the second motor 387 moves according to the driving of the second drive module 830b, a plurality of unit chains forming the second cableveyor 838 move together in the second direction along the second motor 387 while rotating mutually.

Additionally, one side of the third cableveyor 836 is coupled to the third motor 835, and the other side thereof is fixed to the center of the second fixed frame 802. When the third motor 385 moves according to the driving of the second drive module 830b, a plurality of unit chains forming the third cableveyor 836 move together in the second direction along the third motor 385 while rotating mutually.

The plurality of unit chains included in the second and third cableveyors 836, 838, respectively, can also be named as transfer rollers for transferring the plurality of movable frames 840. Additionally, the second and third cableveyors 836, 838 can be made of a different material from the plurality of movable frames 840, for example, an elastic material.

Referring to FIG. 10, a plurality of unit chains of the second and third cableveyors 836, 838 move together according to the driving of the second and third motors 835, 837, and the plurality of movable frames 840a, 840b move simultaneously in a second direction M2 of getting closer to each other. In this case, second and third cableveyor connection modules (not shown) for connecting to a central point of the second fixed frame 802 can be further included.

Meanwhile, the second and third motors 835, 837 arranged inside the second fixed frame 802 are respectively coupled to pass through the matching movable frames 840a, 840b. Specifically, the second motor 837 is coupled to pass through an upper rear surface of the movable frame 830a, such that when the second motor 837 moves according to the driving of the rack and pinion gear module 839, the movable frame 830a operates to move together with the second motor 837 in a second direction. Additionally, the third motor 835 is coupled to pass through an upper rear surface of the movable frame 830b, such that when the third motor 835 moves according to the driving of the rack and pinion gear module 839, the movable frame 830b operates to move together with the third motor 835 in a second direction.

In this way, the second and third cableveyors 836, 838 can operate respectively in conjunction with the plurality of movable frames 840a, 840b to move in a left-right direction (or horizontal direction) along the second and third motors 835, 837 within the second fixed frame 802. In this case, the plurality of unit chains included in each of the second and third cableveyors 836, 838 move gradually along the second and third motors 835, 837.

Although not shown in detail, the respective rotation shafts (drive shafts) of the second and third motors 835, 837 operate in conjunction with the rack and pinion gear module 839 formed on one side inside the first fixed frame 802, for example, on an upper side thereinside. Specifically, a pinion protruding to engage with each of the drive shafts of the second and third motors 835, 837 engages with a rack formed on one side (e.g., upper side) of the guide rail of the second fixed frame 802 to form a fastening structure that drives according to the rotation of the second and third motors 835, 837.

In this case, the second and third motors 835, 837 operate to rotate simultaneously in different directions. Accordingly, while the driving of the rack and pinion gear module in conjunction with the second motor 837 moves the second motor 837 and the movable frame 830a in a right direction, the driving of the rack and pinion gear module in conjunction with the third motor 835 moves the third motor 835 and the movable frame 830b in a left direction.

The rack and pinion gear module 839 includes a plurality of racks formed along a length direction on one side of the second fixed frame 802, for example, on both sides of an upper side thereinside, and a plurality of pinions coupled to drive shafts of the second and third motors 835, 837, respectively. That is, on an inner side of the second fixed frame 802, the second and third motors 835, 837 respectively operate in conjunction with independent rack and pinion gear modules 839.

Meanwhile, in an embodiment, the control part 850 of the vehicle rear seat display device 800 can apply electrical power to the second and third motors 835, 837 in response to a second signal, and control each motor to rotate in a different direction. In this case, the second and third motors 835, 837 are driven simultaneously at the same rotational speed, thereby allowing a distance of movement of each of the plurality of movable frames 840a, 8040b to be the same.

Additionally, the control part 850 of the vehicle rear seat display device 800 can control a distance and speed of movement of the second and third motors 835, 837 that are driven simultaneously. For example, the control part 850 can control electrical power applied to the second and third motors 835, 837 to control a speed of movement of the plurality of movable frames 840a, 840b getting closer to or away from each other.

Additionally, the control part 850 of the vehicle rear seat display device 800 can stop the rotation of the second and third motors 835, 837 based on the detection of contact on one side surface of the plurality of movable frames 840a, 840b according to the driving of the second and third motors 835, 837 of the second drive module 830b. Additionally, the control part 850 can stop the rotation of the second and third motors 835, 837 when the second and third motors 835, 837 reach both ends within the second fixed frame 802 according to the driving of the second and third motors 835, 837 of the second drive module 830b.

Meanwhile, as another embodiment, the structure of FIGS. 9 and 10 can be modified such that the rack and pinion gear module 839 in conjunction with the second and third motors 835, 837 is one, and the second and third motors 835, 837 share one rack and pinion gear module 839.

In this case, the control part 850 can control only one of the second and third motors 835, 837 to drive, and accordingly, only one of the plurality of movable frames 840 can operate to move in a horizontal direction. This allows a left occupant in the rear seat to use the first and second displays 820a, 820b arranged on front surfaces of the plurality of movable frames 840 as a connected screen, or a right occupant in the rear seat to use the first and second displays 820a, 820b as a connected screen.

Meanwhile, the vehicle rear seat display device 800 according to an embodiment of the present disclosure includes the third drive module 860 to perform a tilting operation so as to allow the plurality of movable frames 840 to form a predetermined angle based on the first fixed frame 801 installed on the ceiling of the vehicle.

FIG. 11 is a drawing for explaining a structure of the third drive module 860 for angle adjustment according to an embodiment of the present disclosure.

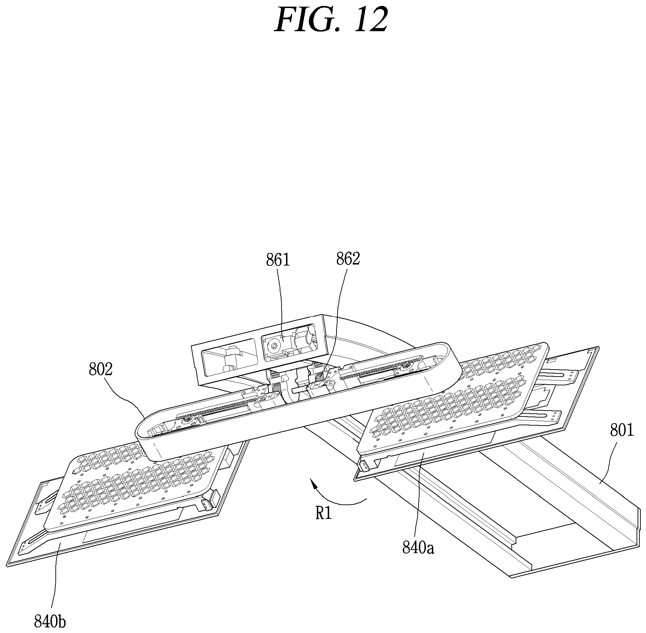

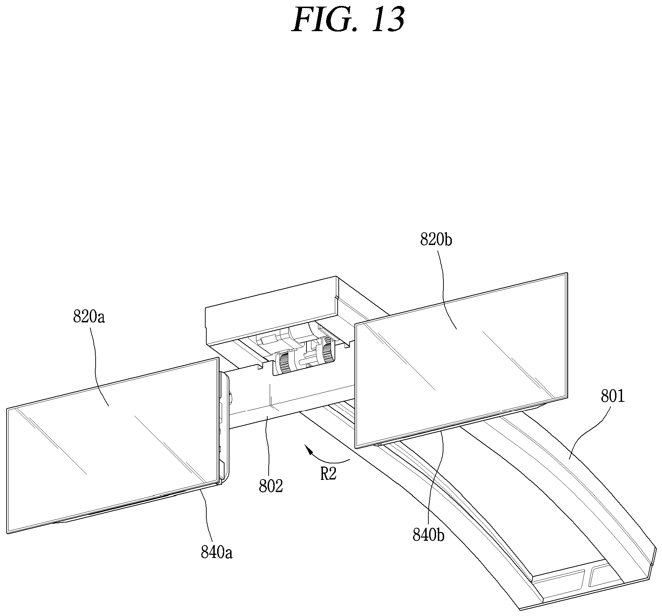

FIGS. 12 and 13 are drawings for explaining an operation of the third drive module 860.

The third drive module 860 is formed to adjust tilting so as to allow the plurality of movable frames 840 in conjunction therewith to form a predetermined angle with respect to the first fixed frame 801.

To this end, the third drive module 860 is arranged across the first fixed frame 801 and the second fixed frame 802. Specifically, the fourth motor 861 of the third drive module 860 is arranged parallel to a length direction within the first fixed frame 801. Additionally, a tilting gear module 862 of the third drive module 860 is arranged to couple one side of the first fixed frame 801 and one side of the second fixed frame 802. The tilting gear module 862 receives a driving force according to the driving of the fourth motor 861 to operates so as to allow the plurality of movable frames 840 in conjunction therewith to form a set predetermined angle.

Referring to FIG. 8, the fourth motor 861 is arranged adjacent to the first motor 831 but is arranged in a direction orthogonal to each other. One side of the fourth motor 861 is coupled to the tilting gear module 862 to provide a driving force to the tilting gear module 862 when the fourth motor 861 is driven. The driving force transmitted to the tilting gear module 862 allows the second fixed frame 802 to rotate clockwise or counterclockwise with respect to the first fixed frame 801. Accordingly, the plurality of movable frames 840a, 840b coupled to the second fixed frame 802 tilt and rotate clockwise or counterclockwise along the second fixed frame 802.

In an embodiment, the control part 850 of the vehicle rear seat display device 800 can operate the third drive module 860 before driving the first drive module 830a according to a first signal.

Specifically, while the plurality of movable frames 840 are perpendicular to the first fixed frame 801, tilting rotation can be performed such that the plurality of movable frames 840 become parallel to the first fixed frame 801 according to the driving of the third drive module 860. It can be said that the tilting rotation allows the second fixed frame 802 and the plurality of movable frames 840 to be folded with respect to the first fixed frame 801. In this case, the fourth motor 861 of the third drive module 860 is driven in a first rotation direction.

Additionally, in an embodiment, the control part 850 of the vehicle rear seat display device 800 can operate the third drive module 860 after driving the first drive module 830a according to the first signal.

Specifically, when the plurality of movable frames 840 are parallel to the first fixed frame 801, tilting rotation can be performed so as to allow the plurality of movable frames 840 to form a vertical or predetermined angle with respect to the first fixed frame 801 according to the driving of the third drive module 860. It can be said that the tilting rotation allows the second fixed frame 802 and the plurality of movable frames 840 to unfold with respect to the first fixed frame 801. In this case, the fourth motor 861 of the third drive module 860 is driven in a second rotation direction, which is opposite to the first rotation direction corresponding to the foregoing folding operation.

FIG. 12 is an example in which the vehicle display device 800 moves from the rear seat toward the front seat and then performs an unfolding operation.

Referring to FIG. 12, after the driving of the first drive module 830a is completed in response to the first signal, the fourth motor 861 of the third drive module 860 is driven to perform an unfolding operation so as to allow the second fixed frame 802 and the plurality of movable frames 840 to rotate in a counterclockwise direction (R1). In this case, an interval angle between the second fixed frame 802 and the plurality of movable frames 840 with respect to the first fixed frame 801 can be 120 degrees. In other words, an angle between the rear surfaces of the plurality of movable frames 840 and the first fixed frame 801 or the ceiling can be unfolded to form 60 degrees. In this way, the plurality of movable frames 840 are moved toward the front seat and then unfolded to form a predetermined angle according to the driving of the third drive module 860, thereby allowing the occupant in the front seat to view the first and second displays 820a, 820 coupled to the front surfaces of the plurality of movable frames 840 at a comfortable angle.

FIG. 13 is an example in which the vehicle display device 800 moves from the front seat toward the rear seat and then performs an unfolding operation.

Referring to FIG. 13, after the driving of the first drive module 830a is completed in response to the first signal, the fourth motor 861 of the third drive module 860 is driven to perform an unfolding operation so as to allow the second fixed frame 802 and the plurality of movable frames 840 to rotate in a counterclockwise direction (R2). In this case, an interval angle between the second fixed frame 802 and the plurality of movable frames 840 with respect to the first fixed frame 801 can be 90 degrees. In other words, an angle formed by the rear surfaces of the plurality of movable frames 840 and the first fixed frame 801 or the ceiling can be unfolded to form a right angle. In this way, the plurality of movable frames 840 are moved toward the rear seat and then unfolded to form a predetermined angle according to the driving of the third drive module 860, thereby allowing the first and second displays 820a, 820b coupled to the front surfaces of the plurality of movable frames 840 to be aligned to face the occupant in the rear seat.

Meanwhile, as described with reference to FIG. 5B, the plurality of movable frames 840 and the second fixed frame 802 can be parallel to the first fixed frame 801 according to an initial state of the plurality of movable frames 840 or a folding operation before movement according to the driving of the first drive module 820a. For example, in an initial state in which the first and second displays 820a, 820b are not used, the plurality of movable frames 840 can maintain a state parallel to the first fixed frame 801. Additionally, for example, when the plurality of movable frames 840 move from the rear seat to the front seat, as well as when they move back from the front seat to the rear seat, a folding operation can be performed so as to allow the plurality of movable frames 840 to be parallel to the first fixed frame 801 before driving the first drive module 830a.

The folding operation can be performed by rotating the second fixed frame 802 and the plurality of movable frames 840 clockwise according to the driving of the fourth motor 861.

The second fixed frame 802 and the plurality of movable frames 840 rotate so as to be close to the first fixed frame 801 according to a folding operation, and then become parallel to the first fixed frame 801.

Meanwhile, in an initial state in which the plurality of movable frames 840 are parallel to the first fixed frame 801, the control part 850 can perform an unfolding operation by driving the third drive module 860 such that the plurality of movable frames 840 and the second fixed frame 802 form a vertical line with the first fixed frame 801, based on a request for use by a vehicle occupant, for example, an input to the input part 870.

Meanwhile, in some embodiments, a folding or unfolding operation according to the driving of the third drive module 860 can be determined differently depending on a position and arrangement state of the plurality of movable frames 840 and the second fixed frame 801.

To this end, the vehicle rear seat display device 800 can include at least one sensor to detect the position and arrangement state of the plurality of movable frames 840. For example, the first fixed frame 801 and the plurality of movable frames 840 and/or the first fixed frame 801 and the second fixed frame 802 can include a first sensor for detecting whether the position of the plurality of movable frames 840 is the front seat or the rear seat, and a second sensor for detecting whether the plurality of movable frames 840 are in a horizontal state or formed at a predetermined angle (e.g., vertical, 60 to 120 degrees) with respect to the first fixed frame 801.

In this case, the control part 850 can determine a movement operation of the plurality of movable frames 840 according to the composition of at least one of the first and second drive modules, whether the third drive module 860 is driven, and a degree of tilting based on the position and arrangement state of the plurality of movable frames 840 detected through the sensor.

In addition, according to an embodiment, the control part 850 can control whether the first and second displays 820a, 820b arranged on respective front surfaces of the plurality of movable frames 840 are activated, and screens to be displayed differently based on the position and arrangement state of the plurality of movable frames 840 detected through the sensor.

For example, when the plurality of movable frames 840 and the second fixed frame 802 are arranged to form a horizontal line with the first fixed frame 801, the first and second displays 820a, 820b can be controlled to be in a deactivated state. Additionally, for example, when the plurality of movable frames 840 and the second fixed frame 802 are located at a position corresponding to the front seat in the first fixed frame 801, the type of content screen displayed on the first and second displays 820a, 820b can be changed. For example, the control part 850 can control the screen to display content related to driving the vehicle when the plurality of movable frames 840 are in a position corresponding to the front seat, and to display entertainment content when they are in a position corresponding to the rear seat.

As described above, according to a vehicle rear seat display device in accordance with an embodiment of the present disclosure, as a plurality of screens located in a rear seat of a vehicle move in a direction of getting closer to or further away from each other, a display mode of the screen can be changed, thereby allowing them to be used as independent screens or multi-screens depending on the needs of a rear seat occupant. Accordingly, a user experience utilizing a plurality of screens is further expanded. In addition, a plurality of screens located in a rear seat of a vehicle can be implemented to be movable toward a front seat or back toward a rear seat, thereby allowing the rear seat screens to also be used by an occupant in the front seat when necessary. Accordingly, a limited number of displays can be shared by more occupants, thereby expanding the user experience and allowing an interior design of a vehicle to be kept simple.

The foregoing present disclosure can be implemented as codes readable by a computer on a medium written by the program. The computer-readable media includes any type of recording apparatus in which data readable by a computer system is stored. Examples of the computer-readable medium include a hard disk drive (HDD), a solid state disk (SSD), a silicon disk drive (SDD), a ROM, a RAM, a CD-ROM, a magnetic tape, a floppy disk, an optical data storage apparatus and the like, and also include an apparatus implemented in the form of a carrier wave (e.g., transmission over the Internet). In addition, the computer can also include a controller/processor of the vehicle display device 800. Therefore, the detailed description should not be limitedly construed in all of the aspects, and should be understood to be illustrative. The scope of the present disclosure should be determined by reasonable interpretation of the appended claims, and all changes that come within the equivalent scope of the present disclosure are included in the scope of the present disclosure.

## Claims

1. A vehicle rear seat display device, the device comprising:
a first display and a second display coupled to match a plurality of movable frames, respectively, arranged side by side;
a first drive module that drives the plurality of movable frames coupled to the first and second displays to move in a first direction, and a second drive module that drives the plurality of movable frames coupled to the first and second displays to move in a second direction different from the first direction; and
a control part that controls the driving of the first and second drive modules and screens of the first and second displays,
wherein the first drive module is arranged to move together with the plurality of movable frames along a guide rail formed on a first fixed frame,
wherein the second drive module is coupled to one side of the first fixed frame, and arranged such that the plurality of movable frames respectively move along a plurality of guide rails formed on a second fixed frame arranged on rear surfaces of the plurality of movable frames, and
wherein the first and second displays are respectively arranged on front surfaces of the plurality of movable frames, and controlled to move according to the driving of at least one of the first and second drive modules.

2. The device of claim 1, wherein the control part controls the first drive module to move in the first direction along the guide rail of the first fixed frame together with the plurality of movable frames from one of the front and rear seats of the vehicle to a position corresponding to the other in response to a first signal, and controls the second drive module to move the plurality of movable frames in the second direction of getting closer to or away from each other along the plurality of guide rails of the second fixed frame in response to a second signal.

3. The device of claim 2, The device of claim 2, wherein the first drive module comprises a first cableveyor that moves in the first direction within the first fixed frame in conjunction with the plurality of movable frames,
wherein the second drive module comprises second and third cableveyors that move in the second direction within the second fixed frame in conjunction with the plurality of movable frames, respectively, and
wherein each of the first to third cableveyors comprises a plurality of unit chains connected so as to be mutually rotatable.

4. The device of claim 1, wherein the first drive module comprises a first motor mounted within the first fixed frame, and
wherein the first motor applies a driving force to a rack and pinion gear module in conjunction therewith so as to allow the plurality of movable frames to move in the first direction along the guide rail of the first fixed frame.

5. The device of claim 4, wherein the control part controls the first motor to rotate by applying electrical power to the first motor in response to a first signal, and
wherein the first direction is determined as one of directions in which the plurality of movable frames face the front and rear seats of the vehicle according to a rotation direction of the first motor.

6. The device of claim 1, wherein the second drive module comprises:
a second motor and a third motor in conjunction with the plurality of movable frames, respectively, within the second fixed frame,
wherein the second and third motors each apply a driving force to a rack and pinion gear module in conjunction therewith so as to move each of the plurality of movable frames in the second direction along each guide rail within the second fixed frame, and
wherein the second direction is determined by the second motor and the third motor rotating in different rotation directions.

7. The device of claim 6, wherein the control part applies electrical power to the second and third motors in response to the second signal to control each motor to rotate in a different direction, and
wherein the second direction is determined as one of directions in which the plurality of movable frames get closer to or away from each other according to respective rotation directions of the second and third motors.

8. The device of claim 7, wherein the control part controls the electrical power applied to the second and third motors to control a movement speed of the plurality of movable frames getting closer to or away from each other, and controls the rotation of the second and third motors to stop based on respective one sides of the plurality of movable frames being in contact with each other.

9. The device of claim 1, further comprising:
a third drive module coupled to the second fixed frame to adjust tilting so as to allow the plurality of movable frames to form a predetermined angle with respect to the first fixed frame.

10. The device of claim 9, wherein the third drive module comprises:
a fourth motor arranged parallel to a length direction of the first fixed frame, and
wherein the fourth motor applies a driving force to a tilting gear module in conjunction thereto so as to allow the plurality of movable frames to operate to form a predetermined angle with respect to the first fixed frame.

11. The device of claim 10, wherein the control part controls the third drive module to perform a folding operation so as to allow the plurality of movable frames to be horizontal with the first fixed frame before driving the first drive module in response to a first signal, and controls the third drive module to perform an unfolding operation so as to form a predetermined angle with the first fixed frame after moving the plurality of movable frames in response to the first signal.

12. The device of claim 10, wherein in an initial state, the plurality of movable frames are arranged to form a horizontal line with the first fixed frame, and
wherein the control part controls the third drive module to perform an unfolding operation so as to allow the plurality of movable frames to form a vertical line with the first fixed frame in response to a request for use of at least one of the first and second displays in the initial state.

13. The device of claim 1, further comprising:
at least one sensor for detecting a position and arrangement state of the plurality of movable frames,
wherein the control part determines a movement operation of the plurality of movable frames according to the driving of at least one of the first and second drive modules based on the detected position and arrangement state.

14. The device of claim 13, wherein the control part controls whether first and second displays arranged on respective front surfaces of the plurality of movable frames are activated and screens to be displayed differently based on the detected position and arrangement state.
